# EUROPEAN PATENT APPLICATION

(11) **EP 4 773 389 A1**
(43) Date of publication of application: **08.07.2026**
(21) Application number: 24920963.6
(22) Date of filing: 01.02.2024
(51) Int. Cl.: H01M 50/367, H01M 50/342

(54) **BATTERY AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); LIU, Shuangxu, Ningde, Fujian 352100 (CN); GU, Mingguang, Ningde, Fujian 352100 (CN); LI, Yao, Ningde, Fujian 352100 (CN); LI, Wei, Ningde, Fujian 352100 (CN); GAN, Jiuqiang, Ningde, Fujian 352100 (CN); HUANG, Xiuxue, Ningde, Fujian 352100 (CN); CHEN, Weike, Ningde, Fujian 352100 (CN); LI, Quankun, Ningde, Fujian 352100 (CN)
(74) Representative: Ran, Handong
(86) International application number: PCT/CN2024/075293
(87) International publication number: WO 2025/160900

(57) **Abstract**

A battery (100) and an electrical device, relating to the field of batteries. The battery (100) comprises battery cells (20) and a support member (30). Each battery cell (20) comprises a housing (21) and a pressure relief component (212). The housing (21) comprises a first wall portion (211), and the pressure relief component (212) is provided on the first wall portion (211). The pressure relief component (212) comprises a first groove (2121), and is configured to crack along the first groove (2121) during pressure relief of the battery cell (20). The support member (30) supports the first wall portion (211). The support member (30) has a support surface (31) facing the first wall portion (211), and the support surface (31) is provided with a clearance portion (32). In the direction of thickness of the first wall portion (211), a projection of the first groove (2121) lies within the clearance portion (32). By providing the clearance portion (32) on the support member (30) and by allowing the projection of the first groove (2121) in the direction of thickness of the first wall portion (211) to lie within the clearance portion (32), the clearance portion (32) can provide clearance for the first groove (2121). Thus, during pressure relief of the battery cell (20), the support member (30) is less likely to abut against the outer side of the first groove (2121), reducing the likelihood of suppressing the cracking of the first groove (2121). This arrangement ensures that the first groove (2121) can crack promptly during pressure relief of the battery cell (20), thereby helping to improve the reliability of the battery (100).

## Description

### TECHNICAL FIELD

This application relates to the field of batteries, and specifically, to a battery and an electric device.

### BACKGROUND

Batteries are widely used in the field of new energy, such as in electric vehicles and new energy vehicles. New energy vehicles and electric vehicles have become a new development trend of the automotive industry. The development of battery technology requires simultaneous consideration of multiple design factors, such as performance parameters like battery life, energy density, discharge capacity, and charge-discharge rate. Additionally, the reliability of the battery needs to be taken into account. However, the reliability of existing batteries remains relatively poor.

### SUMMARY

Embodiments of this application are intended to provide a battery and an electric device, so as to address the issue of poor reliability of batteries in the related art.

According to a first aspect, an embodiment of this application provides a battery cell. The battery cell includes a battery cell and a support member, where the battery cell includes a housing and a pressure relief component, where the housing includes a first wall portion, the pressure relief component is disposed on the first wall portion, the pressure relief component includes a first groove, and the pressure relief component is configured as capable of rupturing along the first groove when the battery cell relieves pressure; and the support member supports the first wall portion, where the support member has a support surface facing the first wall portion, the support surface is provided with a clearance portion, and along a thickness direction of the first wall portion, a projection of the first groove is located within the clearance portion.

In the above technical solution, the first wall portion of the battery cell is provided with a pressure relief component, and during pressure relief of the battery cell, the pressure relief component can rupture along the first groove to allow the fluid medium inside the battery cell to flow out for pressure relief. The support member can support the battery cell. Through provision of the clearance portion on the support member, with the projection of the first groove along the thickness direction of the first wall portion falling within the clearance portion, the clearance portion can avoid the first groove. In this way, during pressure relief of the battery cell, the support member is less likely to abut against an outer side of the first groove, less likely to suppress deformation of the pressure relief component, and less likely to suppress the rupture of the first groove. This enables the first groove to rupture promptly during pressure relief of the battery cell, improving the timely pressure relief of the battery cell and enhancing the reliability of the battery.

In an optional technical solution of the embodiments of this application, the clearance portion has a first opening formed on the support surface, and a minimum distance between the projection of the first groove on the support surface along the thickness direction of the first wall portion and an edge of the first opening is A, satisfying: A ≥ 3 mm.

In the above technical solution, when the minimum distance between the projection of the first groove on the support surface along the thickness direction of the first wall portion and the edge of the first opening is greater than or equal to 3 mm, in a direction perpendicular to the thickness direction of the first wall portion, the first groove is relatively far from the edge of the first opening, and the clearance portion has a better avoidance effect on the first groove. During pressure relief of the battery cell, the support member is even less likely to abut against the outer side of the first groove, even less likely to suppress deformation of the pressure relief component, and even less likely to suppress the rupture of the first groove. This enables the first groove to rupture promptly during pressure relief of the battery cell, improving the timely pressure relief of the battery cell and enhancing the reliability of the battery. Additionally, by setting the minimum distance between the projection of the first groove on the support surface along the thickness direction of the first wall portion and the edge of the first opening to be greater than or equal to 3 mm, the first opening of the clearance portion is relatively large, which can absorb assembly errors, lowering assembly requirements.

In an optional technical solution of the embodiments of this application, the first wall portion is a rectangular structure, a minimum distance between the projection of the first groove on the support surface along the thickness direction of the first wall portion and the edge of the first opening in a length direction of the first wall portion is A₁, and a minimum distance between the projection of the first groove on the support surface along the thickness direction of the first wall portion and the edge of the first opening in a width direction of the first wall portion is A₂, satisfying: A = A₂, and A₂ < A₁.

In the above technical solution, the minimum distance between the projection of the first groove on the support surface along the thickness direction of the first wall portion and the edge of the first opening in the width direction of the first wall portion is the minimum distance between the projection of the first groove on the support surface along the thickness direction of the first wall portion and the edge of the first opening. Additionally, the minimum distance between the projection of the first groove on the support surface along the thickness direction of the first wall portion and the edge of the first opening in the length direction of the first wall portion is greater than the minimum distance between the projection of the first groove on the support surface along the thickness direction of the first wall portion and the edge of the first opening in the width direction of the first wall portion, so that the support member has less suppression on the deformation of the pressure relief component in the length direction of the first wall portion. Since the first wall portion is a rectangular structure, the stiffness variation of the pressure relief component in the width direction of the first wall portion is smaller, while the stiffness variation of the pressure relief component in the length direction of the first wall portion is larger. The deformation at the middle position of the pressure relief component in the length direction of the first wall portion is greater than the deformation at the edge position of the pressure relief component in the length direction of the first wall portion, while the deformation at the middle position of the pressure relief component in the width direction of the first wall portion is smaller than the deformation at the edge position of the pressure relief component in the width direction of the first wall portion. By setting the minimum distance between the projection of the first groove on the support surface along the thickness direction of the first wall portion and the edge of the first opening in the length direction of the first wall portion to be greater than the minimum distance between the projection of the first groove on the support surface along the thickness direction of the first wall portion and the edge of the first opening in the width direction of the first wall portion, the suppression of deformation of the pressure relief component in the length direction of the first wall portion is reduced, allowing for large deformation of the pressure relief component during pressure relief of the battery cell. This enables the first groove to rupture more promptly, improving the timely pressure relief of the battery cell and enhancing the reliability of the battery.

In an optional technical solution of the embodiments of this application, A₁ ≥ 5 mm.

In the above technical solution, when the minimum distance between the projection of the first groove on the support surface along the thickness direction of the first wall portion and the edge of the first opening in the length direction of the first wall portion is greater than or equal to 5 mm, in the length direction of the first wall portion, the first groove is relatively far from the edge of the first opening, and the clearance portion has a better avoidance effect on the first groove. During pressure relief of the battery cell, the support member is even less likely to abut against the outer side of the first groove, even less likely to suppress deformation of the pressure relief component, and even less likely to suppress the rupture of the first groove. This enables the first groove to rupture promptly during pressure relief of the battery cell, improving the timely pressure relief of the battery cell and enhancing the reliability of the battery. Additionally, by setting the minimum distance between the projection of the first groove on the support surface along the thickness direction of the first wall portion and the edge of the first opening in the length direction of the first wall portion to be greater than or equal to 5 mm, the clearance portion has a larger dimension in the length direction of the first wall portion, which can absorb assembly errors, lowering assembly requirements.

In an optional technical solution of the embodiments of this application, a difference between A₁ and A₂ is less than 10 mm.

In the above technical solution, by setting the difference between A₁ and A₂ to be less than 10 mm, A₁ and A₂ are quite close, resulting in less suppression of deformation of the pressure relief component in the length direction of the first wall portion and less suppression of deformation of the pressure relief component in the width direction of the first wall portion. This allows the pressure relief component to deform more easily in both the length direction of the first wall portion and the width direction of the first wall portion, enabling the first groove to rupture more promptly during pressure relief of the battery cell, improving the timely pressure relief of the battery cell and enhancing the reliability of the battery.

In an optional technical solution of the embodiments of this application, the first groove defines a predetermined pressure relief region, and the pressure relief component includes a second groove, where the second groove is configured to guide at least a portion of the predetermined pressure relief region to flip to open at least a portion of the predetermined pressure relief region; and along the thickness direction of the first wall portion, a projection of the second groove is located within the clearance portion.

In the above technical solution, through provision of the second groove, the strength of the pressure relief component at the position of the second groove is weakened, making it easier for the predetermined pressure relief region to flip open under the action of the fluid medium. This not only increases the probability of opening the predetermined pressure relief region but also increases the opening speed of the predetermined pressure relief region, implementing rapid pressure relief and reducing the risk of explosion or fire of the battery cell, thereby enhancing the reliability of the battery cell. Through provision of the clearance portion on the support member, with the projection of the second groove along the thickness direction of the first wall portion falling within the clearance portion, the clearance portion can avoid the second groove, so that during pressure relief of the battery cell, the support member is less likely to abut against the outer side of the predetermined pressure relief region, less likely to prevent the predetermined pressure relief region from flipping open. This enables the predetermined pressure relief region to flip open promptly during pressure relief of the battery cell, improving the timely pressure relief of the battery cell and enhancing the reliability of the battery.

In an optional technical solution of the embodiments of this application, the clearance portion has a first opening formed on the support surface, and a minimum distance between the projection of the second groove on the support surface along the thickness direction of the first wall portion and an edge of the first opening is B, satisfying: B ≥ 3 mm.

In the above technical solution, when the minimum distance between the projection of the second groove on the support surface along the thickness direction of the first wall portion and the edge of the first opening is greater than or equal to 3 mm, in a direction perpendicular to the thickness direction of the first wall portion, the second groove is relatively far from the edge of the first opening, and the clearance portion has a better avoidance effect on the second groove. During pressure relief of the battery cell, the support member is even less likely to abut against the predetermined pressure relief region, and even less likely to suppress the flipping of the predetermined pressure relief region. This enables the predetermined pressure relief region to flip open promptly during pressure relief of the battery cell, improving the timely pressure relief of the battery cell and enhancing the reliability of the battery. Additionally, by setting the minimum distance between the projection of the second groove on the support surface along the thickness direction of the first wall portion and the edge of the first opening to be greater than or equal to 3 mm, the first opening of the clearance portion is relatively large, which can absorb assembly errors, further lowering assembly requirements.

In an optional technical solution of the embodiments of this application, the first wall portion is a rectangular structure, a minimum distance between the projection of the second groove on the support surface along the thickness direction of the first wall portion and the edge of the first opening in the length direction of the first wall portion is B₁, and a minimum distance between the projection of the second groove on the support surface along the thickness direction of the first wall portion and the edge of the first opening in the width direction of the first wall portion is B₂, satisfying: B = B₂, and B₂ < B₁.

In the above technical solution, the minimum distance between the projection of the second groove on the support surface along the thickness direction of the first wall portion and the edge of the first opening in the width direction of the first wall portion is the minimum distance between the projection of the second groove on the support surface along the thickness direction of the first wall portion and the edge of the first opening. Additionally, the minimum distance between the projection of the second groove on the support surface along the thickness direction of the first wall portion and the edge of the first opening in the length direction of the first wall portion is greater than the minimum distance between the projection of the second groove on the support surface along the thickness direction of the first wall portion and the edge of the first opening in the width direction of the first wall portion, so that the support member has less suppression on the deformation of the pressure relief component in the length direction of the first wall portion. Since the first wall portion is a rectangular structure, the stiffness variation of the pressure relief component in the width direction of the first wall portion is smaller, while the stiffness variation of the pressure relief component in the length direction of the first wall portion is larger. The deformation at the middle position of the pressure relief component in the length direction of the first wall portion is greater than the deformation at the edge position of the pressure relief component in the length direction of the first wall portion, while the deformation at the middle position of the pressure relief component in the width direction of the first wall portion is smaller than the deformation at the edge position of the pressure relief component in the width direction of the first wall portion. By setting the minimum distance between the projection of the second groove on the support surface along the thickness direction of the first wall portion and the edge of the first opening in the length direction of the first wall portion to be greater than the minimum distance between the projection of the second groove on the support surface along the thickness direction of the first wall portion and the edge of the first opening in the width direction of the first wall portion, the suppression of deformation of the pressure relief component in the length direction of the first wall portion is reduced, allowing for large deformation of the pressure relief component during pressure relief of the battery cell. This enables the predetermined pressure relief region to flip open promptly during pressure relief of the battery cell, improving the timely pressure relief of the battery cell and enhancing the reliability of the battery.

In an optional technical solution of the embodiments of this application, the first groove and the second groove are arranged along the width direction of the first wall portion, and the minimum distance between the projection of the first groove on the support surface along the thickness direction of the first wall portion and the edge of the first opening in the width direction of the first wall portion is A₁, where A₁ > B₁.

In the above technical solution, in the width direction of the first wall portion, the second groove is closer to the edge of the first opening than the first groove, so that the support member is less likely to suppress the rupture of the first groove, enabling the first groove to rupture promptly during pressure relief of the battery cell.

In an optional technical solution of the embodiments of this application, along the width direction of the first wall portion, the projection of the second groove on the support surface is located between the projection of the first groove on the support surface and the edge of the first opening.

In the above technical solution, with the projection of the second groove on the support surface falling between the projection of the first groove on the support surface and the edge of the first opening, in the width direction of the first wall portion, the first groove is farther from the edge of the first opening than the second groove, so that the support member is even less likely to suppress the rupture of the first groove, enabling the first groove to rupture promptly during pressure relief of the battery cell.

In an optional technical solution of the embodiments of this application, along the width direction of the first wall portion, the second groove is disposed on each of two sides of the first groove.

In the above technical solution, through provision of the second groove on each of two sides of the first groove along the width direction of the first wall portion, predetermined pressure relief regions are defined on two sides of the first groove along the width direction of the first wall portion. During pressure relief of the battery cell, the two predetermined pressure relief regions flip open under the guidance of their respective second grooves, enabling the battery cell to have larger pressure relief area, thereby improving the pressure relief speed of the battery cell and enhancing the reliability of the battery cell.

In an optional technical solution of the embodiments of this application, the pressure relief component has a first surface and a second surface opposite each other in the thickness direction of the first wall portion, where the first groove is disposed on the first surface, and the second groove is disposed on the second surface.

In the above technical solution, the first groove and the second groove are respectively disposed on the first surface and the second surface of the pressure relief component, so that the first groove and the second groove are respectively located on two sides of the pressure relief component. This facilitates processing of the first groove and the second groove on the respective sides of the pressure relief component, reducing mutual interference between the first groove and the second groove during the processing.

In an optional technical solution of the embodiments of this application, the first surface is a surface of the pressure relief component facing away from an interior of the housing, and the second surface is a surface of the pressure relief component facing the interior of the housing.

In the above technical solution, the first groove is disposed on the surface of the pressure relief component facing away from the interior of the housing, so that the tension to be overcome by the first groove to rupture is relatively small, making it easier to rupture. The second groove is disposed on the surface of the pressure relief component facing the interior of the housing, so that the tension to be overcome by the predetermined pressure relief region to flip is relatively small, allowing the predetermined pressure relief region to rapidly flip open, thereby enhancing the reliability of the battery cell.

In an optional technical solution of the embodiments of this application, the first groove includes a first groove segment, a second groove segment, and a third groove segment, where the first groove segment and the third groove segment are opposite each other, the second groove segment connects the first groove segment and the third groove segment, and the first groove segment, the second groove segment, and the third groove segment define the predetermined pressure relief region.

In the above technical solution, the first groove includes a first groove segment, a second groove segment, and a third groove segment, and the second groove segment connects the first groove segment and the third groove segment, so that during pressure relief of the battery cell, the pressure relief component can rupture along the first groove segment, the second groove segment, and the third groove segment to open the predetermined pressure relief region and release the internal pressure of the battery cell. The first groove with this structure makes the connection position of the first groove segment and the second groove segment and the connection position of the first groove segment and the third groove segment weaker and easier to rupture, facilitating the opening of the predetermined pressure relief region for pressure relief and further increasing the pressure relief area and pressure relief speed of the battery cell.

In an optional technical solution of the embodiments of this application, the first groove defines two predetermined pressure relief regions, the two predetermined pressure relief regions are respectively located on two sides of the second groove segment, and each predetermined pressure relief region is correspondingly provided with at least one second groove.

In the above technical solution, the first groove defines two predetermined pressure relief regions, and each predetermined pressure relief region is correspondingly provided with at least one second groove. During pressure relief of the battery cell, the two predetermined pressure relief regions flip open under the guidance of their respective second grooves. This allows for large pressure relief area for the battery cell, improving the pressure relief speed of the battery cell and enhancing the reliability of the battery cell.

In an optional technical solution of the embodiments of this application, each predetermined pressure relief region is correspondingly provided with one second groove, and the first groove is located between the two second grooves.

In the above technical solution, the predetermined pressure relief regions are in one-to-one correspondence with the second grooves, which can reduce the number of second grooves, reduce the number of processings on the pressure relief component, and lower the stress on the pressure relief component. Through provision of the first groove between the two second grooves, during pressure relief of the battery cell, the pressure relief component can rupture along the first groove segment, the second groove segment, and the third groove segment, thereby opening the two predetermined pressure relief regions. The two predetermined pressure relief regions flip open under the guidance of their respective second grooves, enabling the battery cell to have larger pressure relief area, thereby improving the pressure relief speed of the battery cell and enhancing the reliability of the battery cell.

In an optional technical solution of the embodiments of this application, a connection position of the second groove segment and the first groove segment is offset from both ends of the first groove segment, and a connection position of the second groove segment and the third groove segment is offset from both ends of the third groove segment.

In the above technical solution, by setting the connection position of the second groove segment and the first groove segment to be between the two ends of the second groove segment, and setting the connection position of the second groove segment and the third groove segment to be between the two ends of the third groove segment, the first groove segment, the second groove segment, and the third groove segment form a structure resembling an "H" shape. In this way, the predetermined pressure relief regions can be formed on two sides of the second groove segment of the first groove, and the two predetermined pressure relief regions can open in a split manner for pressure relief during pressure relief of the battery cell, further enhancing the pressure relief effect of the battery cell and effectively increasing the pressure relief speed of the battery cell.

In an optional technical solution of the embodiments of this application, the first groove segment, the second groove segment, and the third groove segment are all spaced apart from the second groove.

In the above technical solution, the first groove segment, the second groove segment, and the third groove segment are all spaced apart from the second groove, which can reduce mutual interference between the first groove and the second groove during the processing; and can also reduce the phenomenon of the pressure relief component rupturing along the second groove when rupturing along the first groove during pressure relief, and reduce the stress influence between the region of the pressure relief component where the first groove is provided and the region of the pressure relief component where the second groove is provided.

In an optional technical solution of the embodiments of this application, the second groove segment and the second groove are opposite each other along a first direction, and along the first direction, the first groove segment and the third groove segment are both spaced apart from the second groove.

In the above technical solution, the second groove segment and the second groove are disposed opposite each other along the first direction, and the first groove segment and the third groove segment are both spaced apart from the second groove along the first direction, so that the predetermined pressure relief region defined by the first groove segment, the second groove segment, and the third groove segment, when opened, flips around the region of the pressure relief component where the second groove is provided. This design also increases the flipping angle of the predetermined pressure relief region after it is opened, thereby increasing the pressure relief area of the battery cell.

In an optional technical solution of the embodiments of this application, the first wall portion is a rectangular structure, and the first direction is parallel to the width direction of the first wall portion.

In the above technical solution, the second groove segment and the second groove are arranged along the width direction of the first wall portion, and along the width direction of the first wall portion, the first groove segment and the third groove segment are both spaced apart from the second groove. The space in the width direction of the first groove segment is larger, facilitating the processing of the first groove and the second groove. Additionally, during production, the burst pressures of multiple processed battery cells are relatively consistent.

In an optional technical solution of the embodiments of this application, the pressure relief component has a first surface and a second surface opposite each other in the thickness direction of the first wall portion, and the first groove includes multiple levels of grooves sequentially disposed along a direction from the first surface to the second surface, where in two adjacent levels of grooves, the groove farther from the first surface is disposed on a bottom surface of the groove closer to the first surface.

In the above technical solution, multiple levels of grooves are sequentially disposed on the pressure relief component along the direction from the first surface to the second surface. During formation, the multiple levels of grooves can be formed step-by-step, reducing the forming force received by the pressure relief component, lowering the risk of cracks in the pressure relief component, and making the pressure relief component less likely to fail due to the cracks at the groove positions, thereby enhancing the reliability of the battery cell. The multiple levels of grooves can be formed by stamping, cold heading, or the like. In this way, the groove walls of the grooves experience cold work hardening (changes in grain arrangement lead to lattice distortion, reducing metal plasticity and increasing material hardness). As a result, the groove walls have enhanced resistance to external impacts and are less likely to be damaged by external impacts. This is beneficial to reducing the risk of liquid leakage in the pressure relief component.

In an optional technical solution of the embodiments of this application, the battery cell includes an electrode terminal, where the electrode terminal is disposed on a wall of the housing other than the first wall portion.

In the above technical solution, the electrode terminal and the pressure relief component are disposed on different walls of the housing. During pressure relief of the battery cell, the ejected fluid medium is less likely to act on the electrode terminal and cause a short circuit of the electrode terminal, reducing the risk of short circuits during pressure relief of the battery cell.

In an optional technical solution of the embodiments of this application, the electrode terminal is disposed on a wall of the housing opposite the first wall portion.

In the above technical solution, the electrode terminal is disposed on a wall of the housing opposite the first wall, making the electrode terminal far from the pressure relief component. During pressure relief of the battery cell, the ejected fluid medium is even less likely to act on the electrode terminal and cause a short circuit of the electrode terminal, further reducing the risk of short circuits during pressure relief of the battery cell.

In an optional technical solution of the embodiments of this application, the housing includes a shell and an end cap, where the shell has a second opening; and the end cap is connected to the shell and closes the second opening; where the end cap is the first wall portion, or the shell includes the first wall portion.

In the above technical solution, when the end cap is the first wall portion, the pressure relief component is disposed on the end cap, which is easy to manufacture. When the shell includes the first wall portion, the pressure relief component is disposed on one wall of the shell, and the fluid medium ejected from the pressure relief component is less likely to act on other electrical connection structures on the end cap, reducing the risk of short circuits in the battery cell.

In an optional technical solution of the embodiments of this application, the clearance portion is a through hole or a groove provided on the support member.

In the above technical solution, a through hole or a groove is formed as a clearance portion on the support member, which is simple, convenient, and easy to manufacture.

In an optional technical solution of the embodiments of this application, the clearance portion is in one-to-one correspondence with the pressure relief component.

In the above technical solution, the clearance portion is in one-to-one correspondence with the pressure relief component, providing an avoidance effect for each pressure relief component. This allows each battery cell to relieve pressure smoothly, enhancing the reliability of the battery. Additionally, since the clearance portion is in one-to-one correspondence with the pressure relief component, the individual clearance portions can be designed to be smaller, and the structure retained between two adjacent clearance portions can be regarded as a reinforcing rib, allowing the support member to have high strength.

In an optional technical solution of the embodiments of this application, at least one clearance portion corresponds to the pressure relief components of multiple battery cells.

In the above technical solution, one clearance portion can correspond to the pressure relief components of multiple battery cells, and the structure retained between two adjacent clearance portions can be regarded as a reinforcing rib, allowing the support member to have high strength. Additionally, the individual clearance portions can be designed to be larger, which can absorb assembly tolerance, lowering assembly requirements.

In an optional technical solution of the embodiments of this application, the battery includes multiple rows of battery cells, and one clearance portion corresponds to the pressure relief components of at least two battery cells in one row of battery cells.

In the above technical solution, the battery includes multiple rows of battery cells, and correspondingly, the clearance portions can also be arranged in multiple rows, with the number of clearance portions being less than the number of battery cells, so that one clearance portion can correspond to the pressure relief components of at least two battery cells in one row of battery cells.

In an optional technical solution of the embodiments of this application, the battery includes multiple rows of battery cells, and one clearance portion corresponds to the pressure relief components of one row of battery cells.

In the above technical solution, the battery includes multiple rows of battery cells, and correspondingly, the clearance portions are also arranged in multiple rows, with one clearance portion corresponding to the pressure relief components of one row of battery cells. This facilitates absorption of assembly tolerance, lowering assembly requirements.

In an optional technical solution of the embodiments of this application, the support member is connected to the first wall portion through an adhesive layer.

In the above technical solution, the support member is adhesively fixed to the wall portion, allowing the battery cell to be stably connected to the support member, and reducing the risk of the battery cell detaching from the support member during use of the battery. Additionally, the assembly difficulty and costs are low.

In an optional technical solution of the embodiments of this application, the clearance portion has a first opening formed on the support surface, and a gap is present between the adhesive layer and an edge of the first opening.

In the above technical solution, a gap is present between the adhesive layer and the edge of the first opening, and the adhesive layer surrounds the outer side of the first opening, making the adhesive layer less likely to suppress deformation of the pressure relief component and less likely to suppress the rupture of the first groove. This enables the first groove to rupture promptly during pressure relief of the battery cell, improving the timely pressure relief of the battery cell and enhancing the reliability of the battery.

In an optional technical solution of the embodiments of this application, the battery includes an electrical cavity and an exhaust cavity, where along the thickness direction of the first wall portion, the electrical cavity and the exhaust cavity are located on two sides of the support member, the electrical cavity is configured to accommodate the battery cell, and the exhaust cavity is configured to guide gas flow during pressure relief of the battery cell.

In the above technical solution, an electrical cavity is provided to accommodate the battery cell, an exhaust cavity is provided to discharge the fluid medium, and the electrical cavity and the exhaust cavity are respectively disposed on two sides of the support member, making the discharged fluid medium less likely to act on the battery cell in the electrical cavity. This reduces the risk of short circuits in the battery cell, enhancing the reliability of the battery.

In an optional technical solution of the embodiments of this application, the support member is configured as capable of performing thermal management on the battery cell.

In the above technical solution, the support member can also perform thermal management on the battery cell to control the temperature of the battery cell within a suitable range, facilitating the performance of the battery cell. A single component of the support member can perform multiple functions, simplifying the structure of the battery.

In an optional technical solution of the embodiments of this application, a minimum thickness of the support member in a region other than the clearance portion is greater than a maximum thickness of the first wall portion.

In the above technical solution, the minimum thickness of the support member in a region other than the clearance portion is designed to be greater than the maximum thickness of the first wall portion, so that the support member has a relatively large thickness, and the support member has sufficient strength to stably support the battery cell.

According to a second aspect, an embodiment of this application further provides an electric device, where the electric device includes the foregoing battery.

### DESCRIPTION OF THE DRAWINGS

To describe the technical solutions in the embodiments of this application more clearly, the following briefly describes the accompanying drawings for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a schematic structural diagram of a battery cell and a support member according to some embodiments of this application;
FIG. 4 is a cross-sectional view of a battery cell and a support member according to some embodiments of this application;
FIG. 5 is an enlarged view of position A in FIG. 4;
FIG. 6 is a schematic bottom view of a battery cell and a support member according to some embodiments of this application;
FIG. 7 is an enlarged view of position B in FIG. 6;
FIG. 8 is a schematic structural diagram of a battery cell according to some embodiments of this application;
FIG. 9 is an exploded view of a battery cell according to some embodiments of this application;
FIG. 10 is a schematic structural diagram of a battery cell and a support member according to some other embodiments of this application;
FIG. 11 is a cross-sectional view of a battery cell and a support member according to some other embodiments of this application;
FIG. 12 is a schematic structural diagram of a battery cell and a support member according to still some other embodiments of this application;
FIG. 13 is a cross-sectional view of a battery cell and a support member according to still some other embodiments of this application; and
FIG. 14 is a cross-sectional view of a battery cell and a support member provided by yet some other embodiments of this application.

Reference signs: 1000. vehicle; 100. battery; 10. box; 11. first box body; 12. second box body; 20. battery cell; 21. housing; 211. first wall portion; 212. pressure relief component; 2121. first groove; 21211. predetermined pressure relief region; 2121a. first groove segment; 2121b. second groove segment; 2121c. third groove segment; 2121d. fourth groove segment; 2122. first surface; 2123. second surface; 2124. second groove; 213. end cap; 214. shell; 2141. second opening; 22. electrode assembly; 23. electrode terminal; 24. current collecting member; 30. support member; 31. support surface; 32. clearance portion; 321. first opening; 40. adhesive layer; 50. electrical cavity; 60. exhaust cavity; 200. controller; and 300. motor.

### DETAILED DESCRIPTION

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The phrase "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same members. For brevity, in different embodiments, detailed descriptions of the same members are not repeated. It should be understood that as shown in the accompanying drawings, dimensions such as thickness, length, and width of various components and dimensions such as thickness, length, and width of integrated apparatuses in the embodiments of this application are merely for illustrative purposes and should not constitute any limitations on this application.

The term "multiple" in this application refers to two or more (including two).

In the embodiments of this application, the battery cell may be a secondary battery. The secondary battery is a battery cell that can be charged after discharge to activate active materials for continuous use.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited in the embodiments of this application.

A battery cell typically includes an electrode assembly. The electrode assembly includes a positive electrode, a negative electrode, and a separator. During the charge and discharge process of the battery cell, active ions (for example, lithium ions) intercalate and deintercalate between the positive electrode and the negative electrode. The separator is disposed between the positive electrode and the negative electrode, preventing short circuits between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either one or both of the two opposite surfaces of the positive electrode current collector.

In an example, the positive electrode current collector may be a metal foil or a composite current collector. For example, as a metal foil, silver-plated aluminum, silver-plated stainless steel, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene, polyethylene terephthalate, polybutylene terephthalate, polystyrene, polyethylene, or the like).

In an example, the positive electrode active material may include at least one of the following materials: lithium-containing phosphate, lithium transition metal oxide, and respective modified compounds thereof. However, this application is not limited to these materials, and other conventional materials that can be used as positive electrode active materials for batteries may also be used. One type of these positive electrode active materials may be used alone, or two or more types may be used in combination. Examples of the lithium-containing phosphate may include, but are not limited to, at least one of lithium iron phosphate (for example, LiFePO₄ (also abbreviated as LFP)), a composite material of lithium iron phosphate and carbon, lithium manganese phosphate (for example, LiMnPO₄), a composite material of lithium manganese phosphate and carbon, lithium iron manganese phosphate, and a composite material of lithium iron manganese phosphate and carbon. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (for example, LiNi_{0.85}Co_{0.15}Al_{0.05}O₂), and modified compounds thereof.

In some embodiments, the positive electrode may be foam metal. The foam metal may be foam nickel, foam copper, foam aluminum, foam alloy, or the like. When foam metal is used as the positive electrode, the surface of the foam metal may not be provided with a positive electrode active material, and certainly, it may alternatively be provided with a positive electrode active material. In an example, the foam metal may also be filled or/and deposited with a lithium source material, potassium metal, or sodium metal, where the lithium source material is lithium metal and/or a lithium-rich material.

In some embodiments, the negative electrode may be a negative electrode plate, where the negative electrode plate may include a negative electrode current collector.

In an example, the negative electrode current collector may be a metal foil, foam metal, or a composite current collector. For example, as a metal foil, silver-plated aluminum or stainless steel, stainless steel, copper, aluminum, nickel, carbon electrode, nickel, titanium, or the like may be used. The foam metal may be foam nickel, foam copper, foam aluminum, foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on the polymer material substrate (for example, a substrate of polypropylene, polyethylene terephthalate, polybutylene terephthalate, polystyrene, polyethylene, or the like).

In an example, the negative electrode plate may include a negative electrode current collector and a negative electrode active material disposed on at least one surface of the negative electrode current collector.

In an example, the negative electrode current collector has two opposite surfaces in its thickness direction, and the negative electrode active material is disposed on either one or both of the two opposite surfaces of the negative electrode current collector.

In an example, the negative electrode active material may be a negative electrode active material known in the art for battery cells. In an example, the negative electrode active material may include at least one of the following materials: artificial graphite, natural graphite, soft carbon, hard carbon, silicon-based materials, tin-based materials, lithium titanate, or the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and other conventional materials that can be used as negative electrode active materials for batteries may also be used. One type of these negative electrode active materials may be used alone, or two or more types may be used in combination.

In some embodiments, a material of the positive electrode current collector may be aluminum, and a material of the negative electrode current collector may be copper.

In some embodiments, the electrode assembly further includes a separator, where the separator is disposed between the positive electrode and the negative electrode.

In some embodiments, the separator is a separator film. The type of the separator film is not limited, and any well-known porous structure separator film with good chemical and mechanical stability may be used.

In an example, a material of the separator film may include at least one of glass fiber, non-woven fabric, polyethylene, polypropylene, and polyvinylidene fluoride. The separator film may be a single-layer film or a multi-layer composite film. When the separator film is a multi-layer composite film, materials of the layers may be the same or different. The separator may be a single component located between the positive and negative electrodes or may be attached to a surface of the positive or negative electrode.

In some embodiments, the separator is a solid-state electrolyte. The solid-state electrolyte is disposed between the positive electrode and the negative electrode, serving both to conduct ions and to isolate the positive and negative electrodes.

In some embodiments, the battery cell further includes an electrolyte. The electrolyte conducts ions between the positive and negative electrodes. The electrolyte may be in liquid, gel, or solid state. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may alternatively be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a polymer as a skeleton network of the electrolyte, paired with an ionic liquid-lithium salt.

The solid-state electrolyte includes a polymer solid-state electrolyte, an inorganic solid-state electrolyte, and a composite solid-state electrolyte.

In an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid-state electrolyte may include one or more of oxide solid electrolyte (crystalline perovskite, sodium superionic conductor, garnet, or amorphous LiPON thin film), sulfide solid electrolyte (crystalline lithium superionic conductor (lithium germanium phosphorus sulfide, or argyrodite), or amorphous sulfide), halide solid electrolyte, nitride solid electrolyte, and hydride solid electrolyte.

In an example, the composite solid-state electrolyte is formed by adding an inorganic solid-state electrolyte filler to a polymer solid-state electrolyte.

In some embodiments, the electrode assembly is a wound structure. The positive electrode plate and the negative electrode plate are wound into a wound structure.

In some embodiments, the electrode assembly is a laminated structure.

In an example, multiple positive electrode plates and multiple negative electrode plates may be provided, where the multiple positive electrode plates and the multiple negative electrode plates are alternately stacked.

In an example, multiple positive electrode plates may be provided, and the negative electrode plate may be folded to form multiple stacked folding segments, with one positive electrode plate sandwiched between adjacent folding segments.

In an example, both the positive electrode plate and the negative electrode plate may be folded to form multiple stacked folding segments.

In an example, multiple separators may be provided, separately disposed between any adjacent positive electrode plates or negative electrode plates.

In an example, the separator may be continuously disposed, arranged between any adjacent positive electrode plates or negative electrode plates by folding or winding.

In some embodiments, the electrode assembly may be cylindrical, flat, prismatic, or any other shapes.

In some embodiments, the electrode assembly is provided with a tab. The tab can conduct current from the electrode assembly. The tab includes a positive tab and a negative tab.

In some embodiments, the battery cell may include a housing. The housing is used to package the electrode assembly, electrolyte, and other components. The housing may be a steel shell, an aluminum shell, a plastic shell (for example, polypropylene), a composite metal shell (for example, a copper-aluminum composite shell), an aluminum-plastic film, or the like.

In an example, the battery cell may be a cylindrical battery cell, a prismatic battery cell, a pouch battery cell, or a battery cell of other shapes. The prismatic battery cell includes, but is not limited to, a square-shell battery cell, a blade-shaped battery cell, a polyhedral battery cell, where the polyhedral battery cell is, for example, a hexagonal prismatic battery cell.

The battery mentioned in the embodiments of this application refers to a single physical module including one or more battery cells to provide higher voltage and capacity.

In some embodiments, the battery may be a battery module. When there are multiple battery cells, the multiple battery cells are arranged and fixed to form one battery module.

In some embodiments, the battery may be a battery pack, where the battery pack includes a box and a battery cell, the battery cell or the battery module being accommodated in the box.

In some embodiments, the box may be part of a chassis structure of a vehicle. For example, a portion of the box may form at least part of the floor of the vehicle, or a portion of the box may form at least part of the crossbeam and longitudinal beam of the vehicle.

In some embodiments, the battery may be an energy storage apparatus. The energy storage apparatus includes an energy storage container, an energy storage cabinet, or the like.

Batteries are widely used in the field of new energy, such as in electric vehicles and new energy vehicles. New energy vehicles and electric vehicles have become a new development trend of the automotive industry. The development of battery technology requires simultaneous consideration of multiple design factors, such as performance parameters like battery life, energy density, discharge capacity, and charge-discharge rate. Additionally, the reliability of the battery needs to be taken into account. However, the reliability of existing batteries remains relatively poor.

For battery cells, to improve reliability, the prior art involves welding a pressure relief mechanism onto a battery cell, so that the pressure relief mechanism opens when internal pressure of the battery cell reaches a burst pressure, to release the internal pressure of the battery cell, reducing the risk of explosion or fire of the battery cell.

However, when the battery cell is placed in a box, the pressure relief mechanism is supported by a support member, and the support member suppresses the deformation of the pressure relief mechanism, causing the pressure relief mechanism to fail to open or to open slowly, unable to quickly release the internal pressure of the battery cell. As a result, the battery cell still has a significant risk of explosion or fire, leading to poor reliability of the battery cell.

In view of this, an embodiment of this application provides a battery cell, where the battery cell includes a battery cell and a support member. The battery cell includes a housing and a pressure relief component, where the housing includes a first wall portion, and the pressure relief component is disposed on the first wall portion. The pressure relief component includes a first groove, and the pressure relief component is configured as capable of rupturing along the first groove during pressure relief of the battery cell. The support member supports the first wall portion, the support member has a support surface facing the first wall portion, and the support surface is provided with a clearance portion. Along a thickness direction of the first wall portion, a projection of the first groove is located within the clearance portion.

The first wall portion of the battery cell is provided with a pressure relief component, and during pressure relief of the battery cell, the pressure relief component can rupture along the first groove to allow the fluid medium inside the battery cell to flow out for pressure relief. The support member can support the battery cell. Through provision of the clearance portion on the support member, with the projection of the first groove along the thickness direction of the first wall portion falling within the clearance portion, the clearance portion can avoid the first groove, so that during pressure relief of the battery cell, the support member is less likely to abut against the outer side of the first groove, less likely to suppress deformation of the pressure relief component, and less likely to suppress the rupture of the first groove. This enables the first groove to rupture promptly during pressure relief of the battery cell, improving the timely pressure relief of the battery cell and enhancing the reliability of the battery.

The battery disclosed in the embodiments of this application can be used in, but not limited to, electric apparatuses such as vehicles, ships, or aircraft. A power supply system including the battery disclosed in this application can be used, which is beneficial to improving the reliability of the battery cell.

An embodiment of this application provides an electric apparatus using a battery as a power source. The electric apparatus may be, but is not limited to, a mobile phone, a tablet, a laptop computer, an electric toy, an electric tool, an electric bicycle, an electric vehicle, a ship, a spacecraft, or the like. The electric toy may include a fixed or mobile electric toy, such as a game console, an electric toy car, an electric toy ship, or an electric toy airplane. The spacecraft may include an airplane, a rocket, a space shuttle, a spaceship, and the like.

For ease of description, the electric apparatus of an embodiment of this application being a vehicle is used as an example for description of the following embodiments.

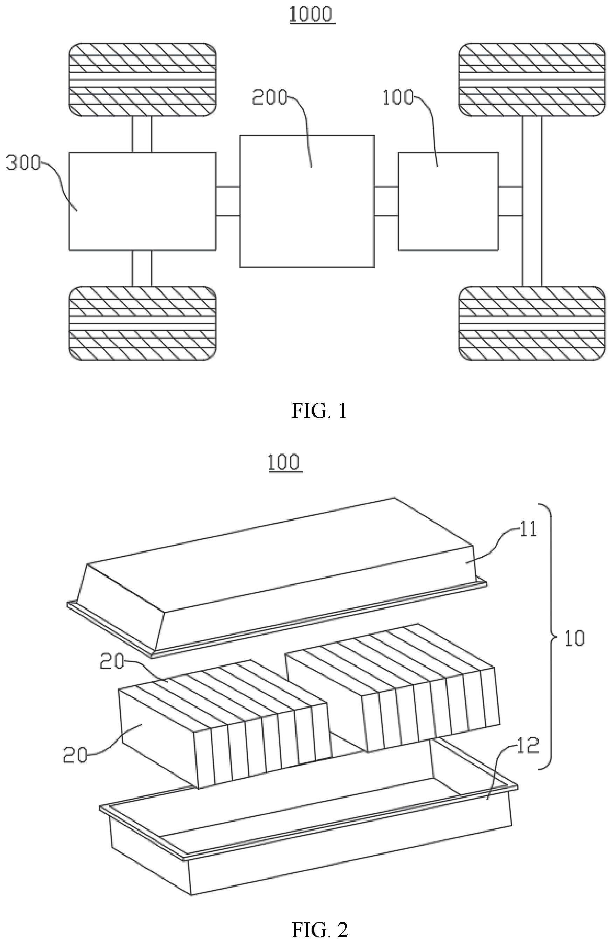

Referring to FIG. 1, FIG. 1 is a schematic structural diagram of a vehicle 1000 according to some embodiments of this application. The vehicle 1000 may be a fuel vehicle, a gas vehicle, or a new energy vehicle, and the new energy vehicle may be a battery electric vehicle, a hybrid vehicle, an extended-range vehicle, or the like. A battery 100 is provided inside the vehicle 1000, and the battery 100 may be disposed at the bottom of the vehicle 1000, the front of the vehicle 1000, or the rear of the vehicle 1000. The battery 100 may be configured to supply power to the vehicle 1000. For example, the battery 100 may be used as an operational power source a utility power source, or the like for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 may be used not only as an operational power source for the vehicle 1000 but also as a driving power source for the vehicle 1000, replacing or partially replacing fuel or natural gas to provide traction for the vehicle 1000.

Referring to FIG. 2, FIG. 2 is an exploded view of a structure of a battery 100 according to some embodiments of this application. The battery 100 includes a box 10 and a battery cell 20, where the battery cell 20 is accommodated in the box 10.

The box 10 is configured to provide an assembly space for the battery cell 20, and the box 10 may be of various structures. In some embodiments, the box 10 may include a first box body 11 and a second box body 12, where the first box body 11 and the second box body 12 engage with each other, and the first box body 11 and the second box body 12 together define an assembly space for accommodating the battery cell 20. The second box body 12 may be a hollow structure with one end open, and the first box body 11 may be a plate-like structure. The first box body 11 covers the open side of the second box body 12, so that the first box body 11 and the second box body 12 together define the assembly space. Alternatively, the first box body 11 and the second box body 12 may both be hollow structures with one open side, and the open side of the first box body 11 covers the open side of the second box body 12.

Certainly, the box 10 formed by the first box body 11 and the second box body 12 may be of various shapes, such as a cylinder or a cuboid. For example, in FIG. 2, the box 10 is a cuboid.

In the battery 100, one or more battery cells 20 may be accommodated in the box 10. When multiple battery cells 20 are accommodated in the box 10, the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety formed by the multiple battery cells 20 is accommodated in the box 10. Certainly, the battery 100 may be formed by multiple battery cells 20 being connected in series, parallel, or series-parallel first to form a battery module and then multiple battery modules being connected in series, parallel, or series-parallel to form an entirety which is accommodated in the box 10.

In some embodiments, the battery 100 may further include other structures. For example, the battery 100 may further include a busbar component, where the busbar component is configured to connect multiple battery cells 20 to implement electrical connection between the multiple battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat, cuboid, or of other shapes. For example, the battery cell 20 is a cuboid structure.

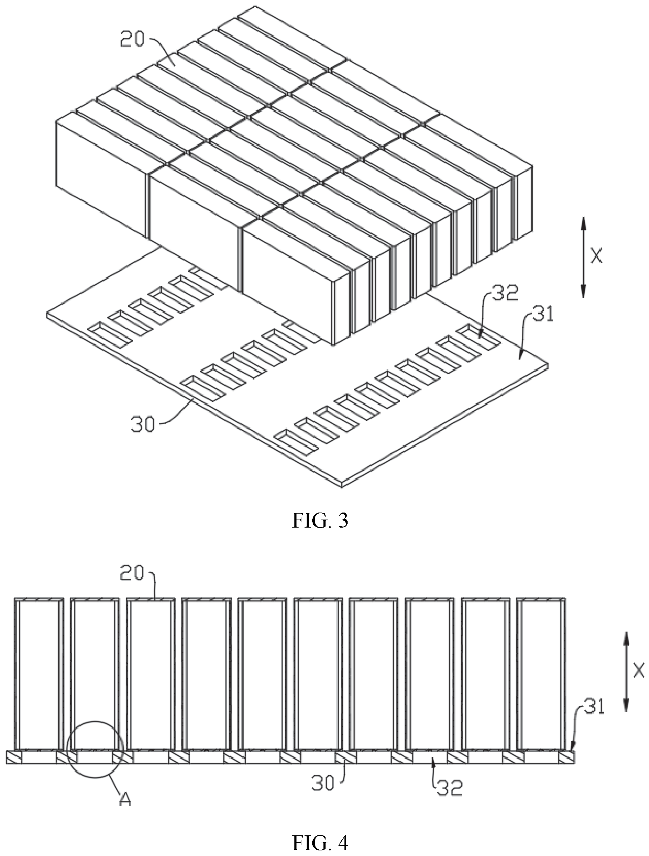

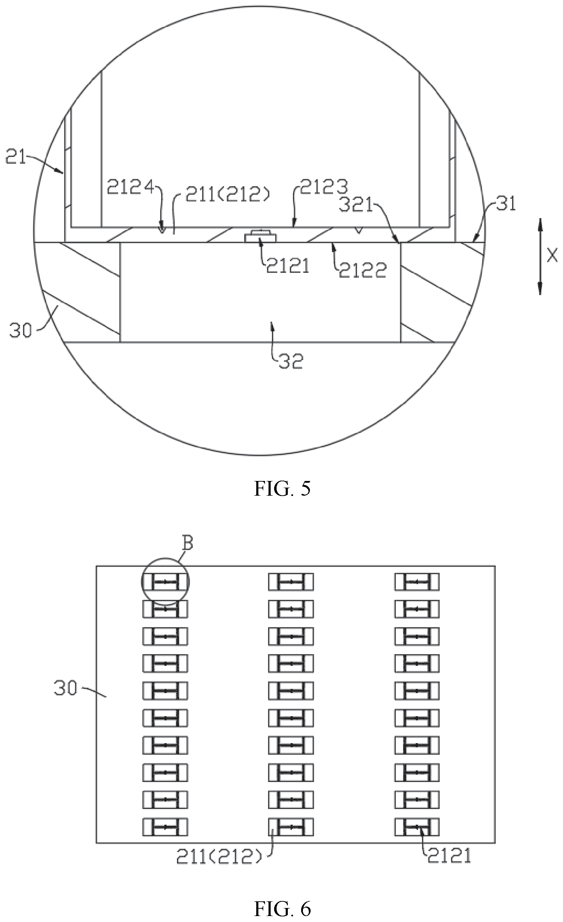

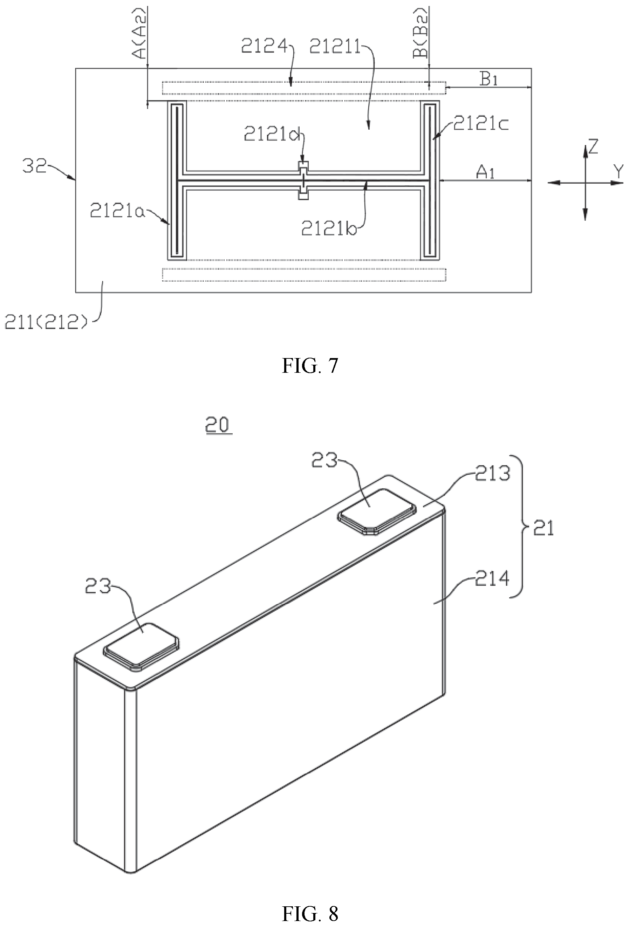

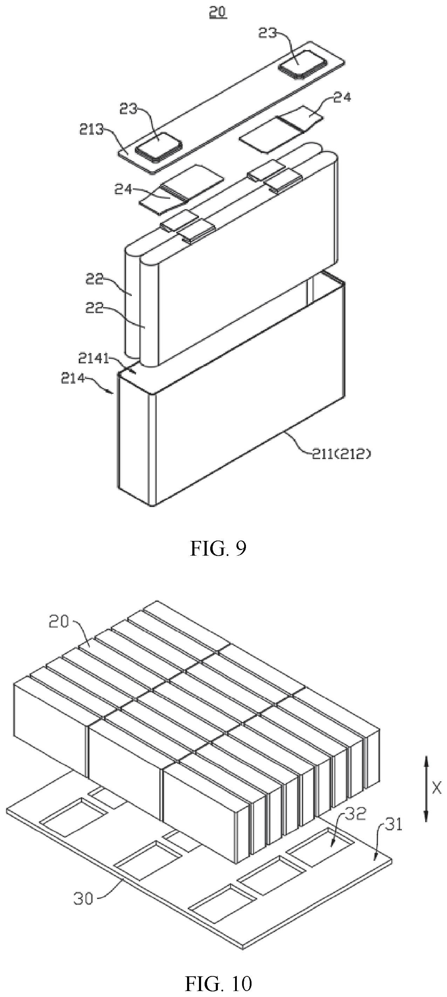

Referring to FIG. 3, FIG. 4, FIG. 5, FIG. 6, FIG. 7, FIG. 8, and FIG. 9, FIG. 3 is a schematic structural diagram of a battery cell 20 and a support member 30 according to some embodiments of this application. FIG. 4 is a cross-sectional view of a battery cell 20 and a support member 30 according to some embodiments of this application. FIG. 5 is an enlarged view of position A in FIG. 4. FIG. 6 is a schematic bottom view of a battery cell 20 and a support member 30 according to some embodiments of this application. FIG. 7 is an enlarged view of position B in FIG. 6. FIG. 8 is a schematic structural diagram of a battery cell 20 according to some embodiments of this application. FIG. 9 is an exploded view of a battery cell 20 according to some embodiments of this application. An embodiment of this application provides a battery cell 20, where the battery cell 20 includes a battery cell 20 and a support member 30. The battery cell 20 includes a housing 21 and a pressure relief component 212, where the housing 21 includes a first wall portion 211, and the pressure relief component 212 is disposed on the first wall portion 211. The pressure relief component 212 includes a first groove 2121, and the pressure relief component 212 is configured as capable of rupturing along the first groove 2121 during pressure relief of the battery cell 20. The support member 30 supports the first wall portion 211, the support member 30 has a support surface 31 facing the first wall portion 211, and the support surface 31 is provided with a clearance portion 32. Along a thickness direction of the first wall portion 211, a projection of the first groove 2121 is located within the clearance portion 32.

The battery cell 20 is a smallest unit constituting the battery 100.

The housing 21 includes an end cap 213 and a shell 214, where the shell 214 has a second opening 2141, and the end cap 213 is connected to the shell 214 and closes the second opening 2141.

The end cap 213 is a component that covers the second opening 2141 of the shell 214 to isolate the internal environment of the battery cell 20 from the external environment. Without limitation, the shape of the end cap 213 may be adapted to the shape of the shell 214 to match the shell 214. Optionally, the end cap 213 may be made of a material with a certain hardness and strength (for example, aluminum alloy), so that the end cap 213 is less likely to deform when subjected to compression or collision, enabling the battery cell 20 to have higher structural strength and improved safety performance. The end cap 213 may be made of various materials, such as copper, iron, aluminum, stainless steel, aluminum alloy, or plastic, which is not particularly limited in the embodiments of this application. In some embodiments, the battery cell 20 further includes an insulating member. The insulating member is disposed on an inner side of the end cap 213, and the insulating member may be configured to isolate the electrical connection components inside the shell 214 from the end cap 213 to reduce the risk of short circuits. For example, the insulating member may be plastic, rubber, or the like.

The shell 214 is an assembly configured to cooperate with the end cap 213 to form an internal environment of the battery cell 20, where the formed internal environment can be used to accommodate the electrode assembly 22, an electrolyte, and other components. The shell 214 and the end cap 213 may be independent components, the second opening 2141 may be formed in the shell 214, and at the second opening 2141, the end cap 213 covers the second opening 2141 to form the internal environment of the battery cell 20. Without limitation, the end cap 213 and the shell 214 may be integrally formed. Specifically, the end cap 213 and the shell 214 may form a common joint surface before other components are placed into the shell, and when the interior of the shell 214 needs to be packaged, the end cap 213 covers the shell 214. The shell 214 may be of various shapes and sizes, such as cuboid, cylindrical, or hexagonal prismatic. Specifically, the shape of the shell 214 may be determined based on the specific shape and size of the electrode assembly 22. The shell 214 may be made of various materials, such as copper, iron, aluminum, stainless steel, aluminum alloy, or plastic, which is not particularly limited in the embodiments of this application.

The electrode assembly 22 is a component in the battery cell 20 where electrochemical reactions take place. The housing 21 may contain one or more electrode assemblies 22. The electrode assembly 22 is mainly formed by winding or stacking a positive electrode plate and a negative electrode plate, and a separator film is typically provided between the positive electrode plate and the negative electrode plate. Parts of the positive electrode plate and the negative electrode plate that have active substances constitute a body portion of the electrode assembly 22, while parts of the positive electrode plate and the negative electrode plate that have no active substances constitute respective tabs. The positive tab and the negative tab may be both located at one end of the body portion or respectively at two ends of the body portion. During the charge and discharge process of the battery 100, the positive electrode active substance and the negative electrode active substance react with the electrolyte.

The first wall portion 211 may be the end cap 213 of the housing 21, or may be one wall of the shell 214 of the housing 21. For example, in FIG. 8 and FIG. 9, the first wall portion 211 is a bottom wall of the shell 214 disposed opposite the end cap 213. In other embodiments, the first wall portion 211 may alternatively be a side wall of the shell 214 adjacent to and connected to the end cap 213.

The pressure relief component 212 may be a component installed on the first wall portion 211. In this case, the pressure relief component 212 is separately formed from and connected to the first wall portion 211. For example, the pressure relief component 212 may be an explosion-proof sheet installed on the first wall portion 211. The pressure relief component 212 may alternatively be a part of the first wall portion 211. In this case, the pressure relief component 212 is integrally formed with the first wall portion 211. Which wall of the housing 21 is the first wall portion 211 can be determined based on the position of the pressure relief component 212. For example, when the pressure relief component 212 is disposed on the end cap 213, the end cap 213 is the first wall portion 211. When the pressure relief component 212 is disposed on the bottom wall of the shell 214, the bottom wall is the first wall portion 211. When the pressure relief component 212 is disposed on a side wall of the shell 214, the side wall is the first wall portion 211.

The first groove 2121 serves to relieve pressure, enabling the pressure relief component 212 to rupture along the first groove 2121 when the internal pressure or temperature of the battery cell 20 reaches a predetermined value, thereby releasing the internal pressure of the battery cell 20.

Optionally, the first groove 2121 may be disposed on a side of the pressure relief component 212 facing an interior of the housing 21, or may be disposed on a side facing away from the interior of the housing 21. For example, in FIG. 4 and FIG. 5, the first groove 2121 is disposed on a side of the pressure relief component 212 facing away from the interior of the housing 21, that is, the first groove 2121 is disposed on a surface of the pressure relief component 212 facing away from the interior of the housing 21.

The support member 30 is a component configured to support the first wall portion 211. In some embodiments, the support member 30 may be a bottom support plate disposed at the bottom of the battery cell 20, and the bottom support plate supports the first wall portion 211 of the battery cell 20. In some other embodiments, the support member 30 may be a part of the box 10. For example, the support member 30 may be a bottom wall of the box 10, and the bottom wall of the box 10 supports the first wall portion 211 of the battery cell 20. In still some other embodiments, the support member 30 may be a thermal management component. For example, the support member 30 may be a water-cooling plate, and the water-cooling plate supports the first wall portion 211 of the battery cell 20.

The support surface 31 is a surface of the support member 30 facing the first wall portion 211. The support surface 31 may directly support the first wall portion 211, or the support surface 31 may indirectly support the first wall portion 211 through an intermediate component.

The clearance portion 32 is a structure configured to avoid the first groove 2121, and the clearance portion 32 is disposed on the support member 30. Specifically, the clearance portion 32 is disposed on the support surface 31 of the support member 30. In some embodiments, the clearance portion 32 is a through hole, where the through hole penetrates the support surface 31 and a surface of the support member 30 opposite the support surface 31. In some other embodiments, the clearance portion 32 is a groove, where the groove is recessed from the support surface 31 in a direction facing away from the first wall portion 211.

Referring to FIG. 3, FIG. 4, and FIG. 5, the thickness direction of the first wall portion 211 may be a direction X shown in the figures.

The clearance portion 32 has a first opening 321 formed on the support surface 31. "Along a thickness direction of the first wall portion 211, a projection of the first groove 2121 is located within the clearance portion 32" can also be understood as: the projection of the first groove 2121 on the support surface 31 along the thickness direction of the first wall portion 211 is located within the first opening 321.

The first wall portion 211 of the battery cell 20 is provided with a pressure relief component 212. During pressure relief of the battery cell 20, the pressure relief component 212 can rupture along the first groove 2121 to allow the fluid medium inside the battery cell 20 to flow out for pressure relief. The support member 30 can support the battery cell 20. Through provision of the clearance portion 32 on the support member 30, with the projection of the first groove 2121 along the thickness direction of the first wall portion 211 falling within the clearance portion 32, the clearance portion 32 can avoid the first groove 2121, so that during pressure relief of the battery cell 20, the support member 30 is less likely to abut against an outer side of the first groove 2121, less likely to suppress deformation of the pressure relief component 212, and less likely to suppress the rupture of the first groove 2121. This enables the first groove 2121 to rupture promptly during pressure relief of the battery cell 20, improving the timely pressure relief of the battery cell 20 and enhancing the reliability of the battery 100.

Referring to FIG. 3, FIG. 4, FIG. 5, FIG. 6, and FIG. 7, the clearance portion 32 has a first opening 321 formed on the support surface 31. A minimum distance between the projection of the first groove 2121 on the support surface 31 along the thickness direction of the first wall portion 211 and an edge of the first opening 321 is A, satisfying: A ≥ 3 mm.

The clearance portion 32 has a peripheral wall, the peripheral wall intersects with the support surface 31 to form an edge line, and the edge line surrounds the first opening 321.

A represents the minimum distance between the projection of the first groove 2121 on the support surface 31 along the thickness direction of the first wall portion 211 and the edge of the first opening 321 (that is, the edge line mentioned above).

A value of the minimum distance between the projection of the first groove 2121 on the support surface 31 along the thickness direction of the first wall portion 211 and the edge of the first opening 321 may be: A = 3 mm, 3.5 mm, 4 mm, 4.5 mm, 5 mm, 5.5 mm, 6 mm, 6.5 mm, 7 mm, 7.5 mm, 8 mm, or the like.

When the minimum distance between the projection of the first groove 2121 on the support surface 31 along the thickness direction of the first wall portion 211 and the edge of the first opening 321 is greater than or equal to 3 mm, in a direction perpendicular to the thickness direction of the first wall portion 211, the first groove 2121 is relatively far from the edge of the first opening 321, and the clearance portion 32 has a better avoidance effect on the first groove 2121. During pressure relief of the battery cell 20, the support member 30 is even less likely to abut against the outer side of the first groove 2121, even less likely to suppress deformation of the pressure relief component 212, and even less likely to suppress the rupture of the first groove 2121. This enables the first groove 2121 to rupture promptly during pressure relief of the battery cell 20, improving the timely pressure relief of the battery cell 20 and enhancing the reliability of the battery 100. Additionally, by setting the minimum distance between the projection of the first groove 2121 on the support surface 31 along the thickness direction of the first wall portion 211 and the edge of the first opening 321 to be greater than or equal to 3 mm, the first opening 321 of the clearance portion 32 is relatively large, which can absorb assembly errors, lowering assembly requirements.

Referring to FIG. 3, FIG. 4, FIG. 5, FIG. 6, and FIG. 7, in some embodiments, the first wall portion 211 is a rectangular structure. A minimum distance between the projection of the first groove 2121 on the support surface 31 along the thickness direction of the first wall portion 211 and the edge of the first opening 321 in the length direction of the first wall portion 211 is A₁, and a minimum distance between the projection of the first groove 2121 on the support surface 31 along the thickness direction of the first wall portion 211 and the edge of the first opening 321 in a width direction of the first wall portion 211 is A₂, satisfying: A = A₂, and A₂ < A₁.

Referring to FIG. 7, the length direction of the first wall portion 211 may be a direction Y shown in the figure, and the width direction of the first wall portion 211 may be a direction Z shown in the figure.

Along the length direction of the first wall portion 211, the first opening 321 has a first short side and a second short side opposite each other. A minimum distance between the projection of the first groove 2121 on the support surface 31 along the thickness direction of the first wall portion 211 and the first short side is a first distance, a minimum distance between the projection of the first groove 2121 on the support surface 31 along the thickness direction of the first wall portion 211 and the second short side is a second distance, and A₁ represents the smaller of the first distance and the second distance.

Along the width direction of the first wall portion 211, the first opening 321 has a first long side and a second long side opposite each other. The first long side, the first short side, the second long side, and the second short side are connected end-to-end. A minimum distance between the projection of the first groove 2121 on the support surface 31 along the thickness direction of the first wall portion 211 and the first long side is a third distance, a minimum distance between the projection of the first groove 2121 on the support surface 31 along the thickness direction of the first wall portion 211 and the second long side is a fourth distance, and A₂ represents the smaller of the third distance and the fourth distance.

A = A₂, meaning that the minimum distance between the projection of the first groove 2121 on the support surface 31 along the thickness direction of the first wall portion 211 and the edge of the first opening 321 in the width direction of the first wall portion 211 is the minimum distance between the projection of the first groove 2121 on the support surface 31 along the thickness direction of the first wall portion 211 and the edge of the first opening 321.

A₂ < A₁, meaning that the minimum distance between the projection of the first groove 2121 on the support surface 31 along the thickness direction of the first wall portion 211 and the edge of the first opening 321 in the width direction of the first wall portion 211 is less than the minimum distance between the projection of the first groove 2121 along the thickness direction of the first wall portion 211 and the edge of the first opening 321 in the length direction of the first wall portion 211.

The minimum distance between the projection of the first groove 2121 on the support surface 31 along the thickness direction of the first wall portion 211 and the edge of the first opening 321 in the length direction of the first wall portion 211 is greater than the minimum distance between the projection of the first groove 2121 on the support surface 31 along the thickness direction of the first wall portion 211 and the edge of the first opening 321 in the width direction of the first wall portion 211, so that the support member 30 has less suppression on the deformation of the pressure relief component 212 in the length direction of the first wall portion 211. Since the first wall portion 211 is a rectangular structure, the stiffness variation of the pressure relief component 212 in the width direction of the first wall portion 211 is smaller, while the stiffness variation of the pressure relief component 212 in the length direction of the first wall portion 211 is larger. The deformation at the middle position of the pressure relief component 212 in the length direction of the first wall portion 211 is greater than the deformation at the edge position of the pressure relief component 212 in the length direction of the first wall portion 211, while the deformation at the middle position of the pressure relief component 212 in the width direction of the first wall portion 211 is smaller than the deformation at the edge position of the pressure relief component 212 in the width direction of the first wall portion 211. By setting the minimum distance between the projection of the first groove 2121 on the support surface 31 along the thickness direction of the first wall portion 211 and the edge of the first opening 321 in the length direction of the first wall portion 211 to be greater than the minimum distance between the projection of the first groove 2121 on the support surface 31 along the thickness direction of the first wall portion 211 and the edge of the first opening 321 in the width direction of the first wall portion 211, the suppression of deformation of the pressure relief component 212 in the length direction of the first wall portion 211 is reduced, allowing for large deformation of the pressure relief component 212 during pressure relief of the battery cell 20. This enables the first groove 2121 to rupture more promptly, improving the timely pressure relief of the battery cell 20 and enhancing the reliability of the battery 100.

In some embodiments, A₁ ≥ 5 mm.

A value of the minimum distance between the projection of the first groove 2121 on the support surface 31 along the thickness direction of the first wall portion 211 and the edge of the first opening 321 in the length direction of the first wall portion 211 may be: A₁ = 5 mm, 5.5 mm, 6 mm, 6.5 mm, 7 mm, 7.5 mm, 8 mm, 8.5 mm, 9 mm, 9.5 mm, 10 mm, or the like.

When the minimum distance between the projection of the first groove 2121 on the support surface 31 along the thickness direction of the first wall portion 211 and the edge of the first opening 321 in the length direction of the first wall portion 211 is greater than or equal to 5 mm, in the length direction of the first wall portion 211, the first groove 2121 is relatively far from the edge of the first opening 321, and the clearance portion 32 has a better avoidance effect on the first groove 2121. During pressure relief of the battery cell 20, the support member 30 is even less likely to abut against the outer side of the first groove 2121, even less likely to suppress deformation of the pressure relief component 212, and even less likely to suppress the rupture of the first groove 2121. This enables the first groove 2121 to rupture promptly during pressure relief of the battery cell 20, improving the timely pressure relief of the battery cell 20 and enhancing the reliability of the battery 100. Additionally, by setting the minimum distance between the projection of the first groove 2121 on the support surface 31 along the thickness direction of the first wall portion 211 and the edge of the first opening 321 in the length direction of the first wall portion 211 to be greater than or equal to 5 mm, the clearance portion 32 has a larger dimension in the length direction of the first wall portion 211, which can absorb assembly errors, further lowering assembly requirements.

In some embodiments, a difference between A₁ and A₂ is less than 10 mm.

"A difference between A₁ and A₂ is less than 10 mm" means: A₁ - A₂ < 10 mm.

By setting the difference between A₁ and A₂ to be less than 10 mm, A₁ and A₂ are quite close, resulting in less suppression of deformation of the pressure relief component 212 in the length direction of the first wall portion 211 and less suppression of deformation of the pressure relief component 212 in the width direction of the first wall portion 211. This allows the pressure relief component 212 to deform more easily in both the length direction of the first wall portion 211 and the width direction of the first wall portion 211, enabling the first groove 2121 to rupture more promptly during pressure relief of the battery cell 20, improving the timely pressure relief of the battery cell 20 and enhancing the reliability of the battery 100.

Referring to FIG. 3, FIG. 4, FIG. 5, FIG. 6, and FIG. 7, in some embodiments, the first groove 2121 defines a predetermined pressure relief region 21211. The pressure relief component 212 includes a second groove 2124, where the second groove 2124 is configured to guide at least a portion of the predetermined pressure relief region 21211 to flip to open at least a portion of the predetermined pressure relief region 21211. Along the thickness direction of the first wall portion 211, a projection of the second groove 2124 is located within the clearance portion 32.

The first groove 2121 defines the predetermined pressure relief region 21211, and during pressure relief of the battery cell 20, the first groove 2121 ruptures along an edge of the predetermined pressure relief region 21211, enabling the predetermined pressure relief region 21211 to open for pressure relief.

The second groove 2124 serves to guide at least a portion of the predetermined pressure relief region 21211 to flip open. Optionally, a depth of the first groove 2121 is greater than a depth of the second groove 2124. During pressure relief of the battery cell 20, the pressure relief component 212 first ruptures along the first groove 2121 to allow the fluid medium inside the battery cell 20 to flow out for pressure relief. Subsequently, the predetermined pressure relief region 21211 can flip outward with the second groove 2124 as the rotation axis under the action of the fluid medium, to open the larger first opening 321 for rapid pressure relief.

The second groove 2124 and the first groove 2121 may be disposed on a same side of the pressure relief component 212, or may be respectively disposed on two sides of the pressure relief component 212. For example, in FIG. 4 and FIG. 5, the first groove 2121 and the second groove 2124 are respectively disposed on two sides of the pressure relief component 212, where the first groove 2121 is disposed on a side of the pressure relief component 212 facing away from the interior of the housing 21, and the second groove 2124 is disposed on a side of the pressure relief component 212 facing the interior of the housing 21.

For example, both the first groove 2121 and the second groove 2124 are formed by a stamping process.

Through provision of the second groove 2124, the strength of the pressure relief component 212 at the position of the second groove 2124 is weakened, making it easier for the predetermined pressure relief region 21211 to flip open under the action of the fluid medium. This not only increases the probability of opening the predetermined pressure relief region 21211 but also increases the opening speed of the predetermined pressure relief region 21211, implementing rapid pressure relief and reducing the risk of explosion or fire of the battery cell 20, thereby enhancing the reliability of the battery cell 20. Through provision of the clearance portion 32 on the support member 30, with the projection of the second groove 2124 along the thickness direction of the first wall portion 211 falling within the clearance portion 32, the clearance portion 32 can avoid the second groove 2124, so that during pressure relief of the battery cell 20, the support member 30 is less likely to abut against the outer side of the predetermined pressure relief region 21211, less likely to prevent the predetermined pressure relief region 21211 from flipping open. This enables the predetermined pressure relief region 21211 to flip open promptly during pressure relief of the battery cell 20, improving the timely pressure relief of the battery cell 20 and enhancing the reliability of the battery 100.

Referring to FIG. 3, FIG. 4, FIG. 5, FIG. 6, and FIG. 7, in some embodiments, the clearance portion 32 has a first opening 321 formed on the support surface 31. The minimum distance between the projection of the second groove 2124 on the support surface 31 along the thickness direction of the first wall portion 211 and an edge of the first opening 321 is B, satisfying: B ≥ 3 mm.

B represents a minimum distance between the projection of the second groove 2124 on the support surface 31 along the thickness direction of the first wall portion 211 and the edge of the first opening 321 (that is, the edge line mentioned above).

A value of the minimum distance between the projection of the second groove 2124 on the support surface 31 along the thickness direction of the first wall portion 211 and the edge of the first opening 321 may be: B = 3 mm, 3.5 mm, 4 mm, 4.5 mm, 5 mm, 5.5 mm, 6 mm, 6.5 mm, 7 mm, 7.5 mm, 8 mm, or the like.

When the minimum distance between the projection of the second groove 2124 on the support surface 31 along the thickness direction of the first wall portion 211 and the edge of the first opening 321 is greater than or equal to 3 mm, in a direction perpendicular to the thickness direction of the first wall portion 211, the second groove 2124 is relatively far from the edge of the first opening 321, and the clearance portion 32 has a better avoidance effect on the second groove 2124. During pressure relief of the battery cell 20, the support member 30 is even less likely to abut against the predetermined pressure relief region 21211, and even less likely to suppress the flipping of the predetermined pressure relief region 21211. This enables the predetermined pressure relief region 21211 to flip open promptly during pressure relief of the battery cell 20, improving the timely pressure relief of the battery cell 20 and enhancing the reliability of the battery 100. Additionally, by setting the minimum distance between the projection of the second groove 2124 on the support surface 31 along the thickness direction of the first wall portion 211 and the edge of the first opening 321 to be greater than or equal to 3 mm, the first opening 321 of the clearance portion 32 is relatively large, which can absorb assembly errors, further lowering assembly requirements.

Referring to FIG. 3, FIG. 4, FIG. 5, FIG. 6, and FIG. 7, in some embodiments, the first wall portion 211 is a rectangular structure. A minimum distance between the projection of the second groove 2124 on the support surface 31 along the thickness direction of the first wall portion 211 and the edge of the first opening 321 in the length direction of the first wall portion 211 is B₁, and a minimum distance between the projection of the second groove 2124 on the support surface 31 along the thickness direction of the first wall portion 211 and the edge of the first opening 321 in the width direction of the first wall portion 211 is B₂, satisfying: B = B₂, and B₂ < B₁.

A minimum distance between the projection of the second groove 2124 on the support surface 31 along the thickness direction of the first wall portion 211 and the first short side is a fifth distance, a minimum distance between the projection of the second groove 2124 on the support surface 31 along the thickness direction of the first wall portion 211 and the second short side is a sixth distance, and B₁ represents the smaller of the fifth distance and the sixth distance.

A minimum distance between the projection of the second groove 2124 on the support surface 31 along the thickness direction of the first wall portion 211 and the first long side is a seventh distance, a minimum distance between the projection of the second groove 2124 on the support surface 31 along the thickness direction of the first wall portion 211 and the second long side is an eighth distance, and B₂ represents the smaller of the seventh distance and the eighth distance.

B = B₂, meaning that the minimum distance between the projection of the second groove 2124 on the support surface 31 along the thickness direction of the first wall portion 211 and the edge of the first opening 321 in the width direction of the first wall portion 211 is the minimum distance between the projection of the second groove 2124 on the support surface 31 along the thickness direction of the first wall portion 211 and the edge of the first opening 321.

B₂ < B₁, meaning that the minimum distance between the projection of the second groove 2124 on the support surface 31 along the thickness direction of the first wall portion 211 and the edge of the first opening 321 in the length direction of the first wall portion 211 is greater than the minimum distance between the projection of the second groove 2124 on the support surface 31 along the thickness direction of the first wall portion 211 and the edge of the first opening 321 in the width direction of the first wall portion 211.

The minimum distance between the projection of the second groove 2124 on the support surface 31 along the thickness direction of the first wall portion 211 and the edge of the first opening 321 in the length direction of the first wall portion 211 is greater than the minimum distance between the projection of the second groove 2124 on the support surface 31 along the thickness direction of the first wall portion 211 and the edge of the first opening 321 in the width direction of the first wall portion 211, so that the support member 30 has less suppression on the deformation of the pressure relief component 212 in the length direction of the first wall portion 211. Since the first wall portion 211 is a rectangular structure, the stiffness variation of the pressure relief component 212 in the width direction of the first wall portion 211 is smaller, while the stiffness variation of the pressure relief component 212 in the length direction of the first wall portion 211 is larger. The deformation at the middle position of the pressure relief component 212 in the length direction of the first wall portion 211 is greater than the deformation at the edge position of the pressure relief component 212 in the length direction of the first wall portion 211, while the deformation at the middle position of the pressure relief component 212 in the width direction of the first wall portion 211 is smaller than the deformation at the edge position of the pressure relief component 212 in the width direction of the first wall portion 211. By setting the minimum distance between the projection of the second groove 2124 on the support surface 31 along the thickness direction of the first wall portion 211 and the edge of the first opening 321 in the length direction of the first wall portion 211 to be greater than the minimum distance between the projection of the second groove 2124 on the support surface 31 along the thickness direction of the first wall portion 211 and the edge of the first opening 321 in the width direction of the first wall portion 211, the suppression of deformation of the pressure relief component 212 in the length direction of the first wall portion 211 is reduced, allowing for large deformation of the pressure relief component 212 during pressure relief of the battery cell 20. This enables the predetermined pressure relief region 21211 to flip open promptly during pressure relief of the battery cell 20, improving the timely pressure relief of the battery cell 20 and enhancing the reliability of the battery 100.

Referring to FIG. 3, FIG. 4, FIG. 5, FIG. 6, and FIG. 7, in some embodiments, the first groove 2121 and the second groove 2124 are arranged along the width direction of the first wall portion 211. The minimum distance between the projection of the first groove 2121 on the support surface 31 along the thickness direction of the first wall portion 211 and the edge of the first opening 321 in the width direction of the first wall portion 211 is A₁, where A₁ > B₁.

The first groove 2121 and the second groove 2124 are arranged along the width direction of the first wall portion 211, and the first groove 2121 and the second groove 2124 may be spaced apart, or the first groove 2121 and the second groove 2124 may be in communication.

A₁ > B₁, meaning that the minimum distance between the projection of the first groove 2121 on the support surface 31 along the thickness direction of the first wall portion 211 and the edge of the first opening 321 in the width direction of the first wall portion 211 is greater than the minimum distance between the projection of the second groove 2124 on the support surface 31 along the thickness direction of the first wall portion 211 and the edge of the first opening 321 in the width direction of the first wall portion 211.

In the width direction of the first wall portion 211, the second groove 2124 is closer to the edge of the first opening 321 than the first groove 2121, so that the support member 30 is less likely to suppress the rupture of the first groove 2121, enabling the first groove 2121 to rupture promptly during pressure relief of the battery cell 20.

Referring to FIG. 3, FIG. 4, FIG. 5, FIG. 6, and FIG. 7, in some embodiments, along the width direction of the first wall portion 211, the projection of the second groove 2124 on the support surface 31 is located between the projection of the first groove 2121 on the support surface 31 and the edge of the first opening 321.

"Along the width direction of the first wall portion 211, the projection of the second groove 2124 on the support surface 31 is located between the projection of the first groove 2121 on the support surface 31 and the edge of the first opening 321" can also be understood as: the projection of the second groove 2124 on the support surface 31 along the thickness direction of the first wall portion 211 is located between the first long side and the projection of the first groove 2121 on the support surface 31 along the thickness direction of the first wall portion 211, or the projection of the second groove 2124 on the support surface 31 along the thickness direction of the first wall portion 211 is located between the second long side and the projection of the first groove 2121 on the support surface 31 along the thickness direction of the first wall portion 211.

With the projection of the second groove 2124 on the support surface 31 falling between the projection of the first groove 2121 on the support surface 31 and the edge of the first opening 321, in the width direction of the first wall portion 211, the first groove 2121 is farther from the edge of the first opening 321 than the second groove 2124, so that the support member 30 is even less likely to suppress the rupture of the first groove 2121, enabling the first groove 2121 to rupture promptly during pressure relief of the battery cell 20.

Referring to FIG. 3, FIG. 4, FIG. 5, FIG. 6, and FIG. 7, in some embodiments, along the width direction of the first wall portion 211, the second groove 2124 is disposed on each of two sides of the first groove 2121.

The second groove 2124 is disposed on each of two sides of the first groove 2121 along the width direction of the first wall portion 211, and one or more second grooves 2124 may be disposed on one side of the first groove 2121 along the width direction of the first wall portion 211.

Through provision of the second groove 2124 on each of two sides of the first groove 2121 along the width direction of the first wall portion 211, predetermined pressure relief regions 21211 are defined on two sides of the first groove 2121 along the width direction of the first wall portion 211. During pressure relief of the battery cell 20, the two predetermined pressure relief regions 21211 flip open under the guidance of their respective second grooves 2124, enabling the battery cell 20 to have larger pressure relief area, thereby improving the pressure relief speed of the battery cell 20 and enhancing the reliability of the battery cell 20.

Referring to FIG. 3, FIG. 4, FIG. 5, FIG. 6, and FIG. 7, in some embodiments, the pressure relief component 212 has a first surface 2122 and a second surface 2123 opposite each other in the thickness direction of the first wall portion 211, where the first groove 2121 is disposed on the first surface 2122, and the second groove 2124 is disposed on the second surface 2123.

The first groove 2121 is disposed on the first surface 2122, and the second groove 2124 is disposed on the second surface 2123, so that the first groove 2121 and the second groove 2124 are respectively located on two opposite surfaces of the pressure relief component 212 in the thickness direction of the first wall portion 211.

The first groove 2121 and the second groove 2124 may be formed by various methods, such as stamping or cold heading. Taking the first groove 2121 being formed by stamping as an example, the first groove 2121 may be formed by stamping on the pressure relief component 212 along a direction from the first surface 2122 to the second surface 2123.

Forming the first groove 2121 and the second groove 2124 by stamping or cold heading causes cold work hardening of the groove walls of the first groove 2121 and the second groove 2124 (changes in grain arrangement lead to lattice distortion, reducing metal plasticity and increasing material hardness). As a result, the groove walls have enhanced resistance to external impacts and are less likely to be damaged by external impacts. This is beneficial to reducing the risk of liquid leakage in the pressure relief component 212.

The first groove 2121 and the second groove 2124 are respectively disposed on the first surface 2122 and the second surface 2123 of the pressure relief component 212, so that the first groove 2121 and the second groove 2124 are respectively located on two sides of the pressure relief component 212, facilitating processing of the first groove 2121 and the second groove 2124 on the respective sides of the pressure relief component 212. This is beneficial to reducing mutual interference between the first groove 2121 and the second groove 2124 during the processing.

Referring to FIG. 3, FIG. 4, FIG. 5, FIG. 6, and FIG. 7, in some embodiments, the first surface 2122 is a surface of the pressure relief component 212 facing away from an interior of the housing 21, and the second surface 2123 is a surface of the pressure relief component 212 facing the interior of the housing 21.

The first surface 2122 is a surface of the pressure relief component 212 facing away from the interior of the housing 21, that is, an outer surface of the pressure relief component 212. The second surface 2123 is a surface of the pressure relief component 212 facing the interior of the housing 21, that is, an inner surface of the pressure relief component 212.

The first groove 2121 is disposed on the outer surface of the pressure relief component 212, and the second groove 2124 is disposed on the inner surface of the pressure relief component 212.

The first groove 2121 is disposed on the surface of the pressure relief component 212 facing away from the interior of the housing 21, so that the tension to be overcome by the first groove 2121 to rupture is relatively small, making it easier to rupture. The second groove 2124 is disposed on the surface of the pressure relief component 212 facing the interior of the housing 21, so that the tension to be overcome by the predetermined pressure relief region 21211 to flip is relatively small, allowing the predetermined pressure relief region 21211 to rapidly flip open, thereby enhancing the reliability of the battery cell 20.

Referring to FIG. 3, FIG. 4, FIG. 5, FIG. 6, and FIG. 7, in some embodiments, the first groove 2121 includes a first groove segment 2121a, a second groove segment 2121b, and a third groove segment 2121c, where the first groove segment 2121a and the third groove segment 2121c are opposite each other, the second groove segment 2121b connects the first groove segment 2121a and the third groove segment 2121c, and the first groove segment 2121a, the second groove segment 2121b, and the third groove segment 2121c define the predetermined pressure relief region 21211.

The first groove segment 2121a and the third groove segment 2121c are spaced apart and at least partially opposite each other. Optionally, both the first groove segment 2121a and the third groove segment 2121c extend along the width direction of the first wall portion 211.

The second groove segment 2121b connects the first groove segment 2121a and the third groove segment 2121c, meaning that the second groove segment 2121b is located between the first groove segment 2121a and the third groove segment 2121c, with two ends of the second groove segment 2121b respectively connected to the first groove segment 2121a and the third groove segment 2121c. Certainly, in other embodiments, two ends of the second groove segment 2121b may respectively extend beyond the first groove segment 2121a and the third groove segment 2121c.

Referring to FIG. 7, a line connecting a free end of the first groove segment 2121a and a free end of the second groove segment 2121b is a first connection line, and the first connection line is disposed opposite the second groove segment 2121b along the width direction of the first wall portion 211. A closed region enclosed by the first groove segment 2121a, the second groove segment 2121b, the third groove segment 2121c, and the first connection line is the predetermined pressure relief region 21211. In other words, the first groove segment 2121a, the second groove segment 2121b, and the third groove segment 2121c are structures disposed along an edge of the predetermined pressure relief region 21211, enabling the predetermined pressure relief region 21211 to open with the first groove segment 2121a, the second groove segment 2121b, and the third groove segment 2121c as boundaries. In other words, the predetermined pressure relief region 21211 is formed within the region enclosed by the first groove segment 2121a, the second groove segment 2121b, and the third groove segment 2121c, so that a portion of the pressure relief component 212 located in the predetermined pressure relief region 21211 can open with the first groove segment 2121a, the second groove segment 2121b, and the third groove segment 2121c as boundaries during pressure relief of the battery cell 20, thereby releasing the internal pressure of the battery cell 20.

The first groove 2121 includes a first groove segment 2121a, a second groove segment 2121b, and a third groove segment 2121c, and the second groove segment 2121b connects the first groove segment 2121a and the third groove segment 2121c, so that during pressure relief of the battery cell 20, the pressure relief component 212 can rupture along the first groove segment 2121a, the second groove segment 2121b, and the third groove segment 2121c to open the predetermined pressure relief region 21211 and release the internal pressure of the battery cell 20. The first groove 2121 with this structure makes the connection position of the first groove segment 2121a and the second groove segment 2121b, and the connection position of the first groove segment 2121a and the third groove segment 2121c weaker and easier to rupture, facilitating the opening of the predetermined pressure relief region 21211 for pressure relief and further increasing the pressure relief area and pressure relief speed of the battery cell 20.

Optionally, the first groove 2121 further includes a fourth groove segment 2121d, where the fourth groove segment 2121d is located between the first groove segment 2121a and the third groove segment 2121c and intersects with the second groove segment 2121b. In this way, the connection position of the fourth groove segment 2121d and the second groove segment 2121b is weaker and much easier to rupture, facilitating the opening of the predetermined pressure relief region 21211 for pressure relief, further increasing the pressure relief area and pressure relief speed of the battery cell 20.

Referring to FIG. 3, FIG. 4, FIG. 5, FIG. 6, and FIG. 7, in some embodiments, the first groove 2121 defines two predetermined pressure relief regions 21211, the two predetermined pressure relief regions 21211 are respectively located on each of two sides of the second groove segment 2121b, and each predetermined pressure relief region 21211 is correspondingly provided with at least one second groove 2124.

Referring to FIG. 7, the first groove 2121 formed by the first groove segment 2121a, the second groove segment 2121b, and the third groove segment 2121c may be an "H"-shape structure, forming two predetermined pressure relief regions 21211 on the pressure relief component 212, with the two predetermined pressure relief regions 21211 respectively located on two sides of the second groove segment 2121b.

Each predetermined pressure relief region 21211 may be correspondingly provided with one second groove 2124, two second grooves 2124, three second grooves 2124, or more than three second grooves 2124. As shown in FIG. 7, each predetermined pressure relief region 21211 is correspondingly provided with one second groove 2124.

The first groove 2121 defines two predetermined pressure relief regions 21211, and each predetermined pressure relief region 21211 is correspondingly provided with at least one second groove 2124. During pressure relief of the battery cell 20, the two predetermined pressure relief regions 21211 flip open under the guidance of their respective second grooves 2124, enabling the battery cell 20 to have larger pressure relief area, thereby improving the pressure relief speed of the battery cell 20 and enhancing the reliability of the battery cell 20.

Referring to FIG. 3, FIG. 4, FIG. 5, FIG. 6, and FIG. 7, in some embodiments, each predetermined pressure relief region 21211 is correspondingly provided with one second groove 2124, and the first groove 2121 is located between the two second grooves 2124.

The predetermined pressure relief regions 21211 are in one-to-one correspondence with the second grooves 2124. Along the width direction of the first wall portion 211, the two second grooves 2124 are located on two sides of the first groove 2121.

As shown in FIG. 7, along the width direction of the first wall portion 211, the first groove 2121 is located between the two second grooves 2124, meaning that along the width direction of the first wall portion 211, the first groove segment 2121a, the second groove segment 2121b, and the third groove segment 2121c are all located between the two second grooves 2124.

The predetermined pressure relief regions 21211 are in one-to-one correspondence with the second grooves 2124, which can reduce the number of second grooves 2124, reduce the number of processings on the pressure relief component 212, and lower the stress on the pressure relief component 212. Through provision of the first groove 2121 between the two second grooves 2124, during pressure relief of the battery cell 20, the pressure relief component 212 can rupture along the first groove segment 2121a, the second groove segment 2121b, and the third groove segment 2121c, thereby opening the two predetermined pressure relief regions 21211. The two predetermined pressure relief regions 21211 flip open under the guidance of their respective second grooves 2124, enabling the battery cell 20 to have larger pressure relief area, thereby improving the pressure relief speed of the battery cell 20 and enhancing the reliability of the battery cell 20.

Referring to FIG. 3, FIG. 4, FIG. 5, FIG. 6, and FIG. 7, in some embodiments, a connection position of the second groove segment 2121b and the first groove segment 2121a is offset from both ends of the first groove segment 2121a, and a connection position of the second groove segment 2121b and the third groove segment 2121c is offset from both ends of the third groove segment 2121c.

The connection position of the second groove segment 2121b and the first groove segment 2121a is offset from both ends of the first groove segment 2121a, meaning that the second groove segment 2121b is connected between the two ends of the first groove segment 2121a. Similarly, the connection position of the second groove segment 2121b and the third groove segment 2121c is offset from both ends of the third groove segment 2121c, meaning that the second groove segment 2121b is connected between the two ends of the third groove segment 2121c. In this way, the first groove 2121 formed by the first groove segment 2121a, the second groove segment 2121b, and the third groove segment 2121c has a shape resembling "H".

By setting the connection position of the second groove segment 2121b and the first groove segment 2121a to be between the two ends of the second groove segment 2121b, and setting the connection position of the second groove segment 2121b and the third groove segment 2121c to be between the two ends of the third groove segment 2121c, the first groove segment 2121a, the second groove segment 2121b, and the third groove segment 2121c form a structure resembling an "H" shape. In this way, the predetermined pressure relief regions 21211 can be formed on two sides of the second groove segment 2121b of the first groove 2121, and the two predetermined pressure relief regions 21211 can open in a split manner for pressure relief during pressure relief of the battery cell 20, further enhancing the pressure relief effect of the battery cell 20 and effectively increasing the pressure relief speed of the battery cell 20.

Referring to FIG. 3, FIG. 4, FIG. 5, FIG. 6, and FIG. 7, in some embodiments, the first groove segment 2121a, the second groove segment 2121b, and the third groove segment 2121c are all spaced apart from the second groove 2124.

Along the thickness direction of the first wall portion 211, the projection of the first groove 2121 does not overlap with the projection of the second groove 2124, meaning that the projection of the first groove segment 2121a along the thickness direction of the first wall portion 211, the projection of the second groove 2124 along the thickness direction of the first wall portion 211, and the projection of the third groove segment 2121c along the thickness direction of the first wall portion 211 do not overlap with the second groove 2124.

The first groove segment 2121a, the second groove segment 2121b, and the third groove segment 2121c are all spaced apart from the second groove 2124, which can reduce mutual interference between the first groove 2121 and the second groove 2124 during the processing; and can also reduce the phenomenon of the pressure relief component 212 rupturing along the second groove 2124 when rupturing along the first groove 2121 during pressure relief, and reduce the stress influence between the region of the pressure relief component 212 where the first groove 2121 is provided and the region of the pressure relief component 212 where the second groove 2124 is provided.

Referring to FIG. 3, FIG. 4, FIG. 5, FIG. 6, and FIG. 7, in some embodiments, the second groove segment 2121b and the second groove 2124 are opposite each other along a first direction. Along the first direction, the first groove segment 2121a and the third groove segment 2121c are both spaced apart from the second groove 2124.

Along the first direction, the second groove segment 2121b and the second groove 2124 are opposite each other, and the first groove segment 2121a and the third groove segment 2121c are both spaced apart from the second groove 2124. The first groove segment 2121a has a distance from the second groove 2124 in a direction in which the second groove segment 2121b and the second groove 2124 are opposite each other. The third groove segment 2121c has a distance from the second groove 2124 in a direction in which the second groove segment 2121b and the second groove 2124 are opposite each other.

The second groove segment 2121b and the second groove 2124 are disposed opposite each other along the first direction, and the first groove segment 2121a and the third groove segment 2121c are both spaced apart from the second groove 2124 along the first direction, so that the predetermined pressure relief region 21211 defined by the first groove segment 2121a, the second groove segment 2121b, and the third groove segment 2121c, when opened, flips around the region of the pressure relief component 212 where the second groove 2124 is provided. This design also increases the flipping angle of the predetermined pressure relief region 21211 after it is opened, thereby increasing the pressure relief area of the battery cell 20.

Referring to FIG. 3, FIG. 4, FIG. 5, FIG. 6, and FIG. 7, in some embodiments, the first wall portion 211 is a rectangular structure, and the first direction is parallel to the width direction of the first wall portion 211.

The second groove segment 2121b and the second groove 2124 are arranged along the width direction of the first wall portion 211, and along the width direction of the first wall portion 211, the first groove segment 2121a and the third groove segment 2121c are both spaced apart from the second groove 2124. The space in the width direction of the first groove segment 2121a is larger, facilitating the processing of the first groove 2121 and the second groove 2124. Additionally, during production, the burst pressures of multiple processed battery cells 20 are relatively consistent.

Referring to FIG. 3, FIG. 4, FIG. 5, FIG. 6, and FIG. 7, in some embodiments, the pressure relief component 212 has a first surface 2122 and a second surface 2123 opposite each other in the thickness direction of the first wall portion 211. The first groove 2121 includes multiple levels of grooves sequentially disposed along a direction from the first surface 2122 to the second surface 2123, where in two adjacent levels of grooves, the groove farther from the first surface 2122 is disposed on the bottom surface of the groove closer to the first surface 2122.

The pressure relief component 212 is provided with multiple levels of grooves, and the multiple levels of grooves are sequentially disposed on the pressure relief component 212 along the direction from the first surface 2122 to the second surface 2123, with the contours of the bottom surfaces of the multiple levels of grooves decreasing level by level. The cross section of the groove may be of various shapes, such as rectangular or circular. The groove on the pressure relief component 212 may be formed using various methods, such as stamping or cold heading.

For example, as shown in FIG. 4 and FIG. 5, the pressure relief component 212 is provided with three levels of grooves, namely a first-level groove, a second-level groove, and a third-level groove. During formation, the first-level groove may be formed by stamping on the first surface 2122, then the second-level groove may be formed by stamping on the bottom surface of the first-level groove, and finally, the third-level groove may be formed by stamping on the bottom surface of the second-level groove.

The multiple levels of grooves are sequentially disposed on the pressure relief component 212 along the direction from the first surface 2122 to the second surface 2123. During formation, the multiple levels of grooves can be formed sequentially on the pressure relief component 212 along the direction from the first surface 2122 to the second surface 2123.

The multiple levels of grooves are sequentially disposed on the pressure relief component 212 along the direction from the first surface 2122 to the second surface 2123. During formation, the multiple levels of grooves can be formed step-by-step, reducing the forming force received by the pressure relief component 212, lowering the risk of cracks in the pressure relief component 212, and making the pressure relief component 212 less likely to fail due to the cracks at the groove positions, thereby enhancing the reliability of the battery cell 20. The multiple levels of grooves can be formed by stamping, cold heading, or the like. In this way, the groove walls of the grooves experience cold work hardening (changes in grain arrangement lead to lattice distortion, reducing metal plasticity and increasing material hardness). As a result, the groove walls have enhanced resistance to external impacts and are less likely to be damaged by external impacts. This is beneficial to reducing the risk of liquid leakage in the pressure relief component 212.

Referring to FIG. 3, FIG. 4, FIG. 5, FIG. 6, FIG. 7, FIG. 8, and FIG. 9, in some embodiments, the battery cell 20 includes an electrode terminal 23, where the electrode terminal 23 is disposed on a wall of the housing 21 other than the first wall portion 211.

The electrode terminal 23 and the pressure relief component 212 are disposed on different walls of the housing 21. For example, when the first wall portion 211 is the bottom wall of the shell 214, the electrode terminal 23 may be disposed on a side wall of the shell 214 or the end cap 213. For another example, when the first wall portion 211 is a side wall of the shell 214, the electrode terminal 23 may be disposed on another side wall, a bottom wall, or the end cap 213 of the shell 214. When the first wall portion 211 is the end cap 213, the electrode terminal 23 may be disposed on a side wall or a bottom wall of the shell 214.

The electrode terminals 23 and the pressure relief component 212 are disposed on different walls of the housing 21, so that during pressure relief of the battery cell 20, the ejected fluid medium is less likely to act on the electrode terminal 23 and cause a short circuit of the electrode terminal 23, reducing the risk of short circuits during pressure relief of the battery cell 20.

Optionally, the electrode terminal 23 is disposed on a wall of the housing 21 opposite the first wall portion 211.

When the first wall portion 211 is the bottom wall of the shell 214, the electrode terminal 23 may be disposed on the end cap 213. When the first wall portion 211 is a side wall of the shell 214, the electrode terminal 23 may be disposed on another side wall of the shell 214 opposite the first wall portion 211. When the first wall portion 211 is the end cap 213, the electrode terminal 23 may be disposed on the bottom wall of the shell 214.

The electrode terminal 23 is disposed on a wall of the housing 21 opposite the first wall, making the electrode terminal 23 far from the pressure relief component 212. During pressure relief of the battery cell 20, the ejected fluid medium is even less likely to act on the electrode terminal 23 and cause a short circuit of the electrode terminal 23, further reducing the risk of short circuits during pressure relief of the battery cell 20.

In some embodiments, the battery cell 20 may further include two current collecting members 24, where the two current collecting members 24 are both disposed within the housing 21, and each current collecting member 24 is configured to connect one electrode terminal 23 and tabs of the same polarity in multiple electrode assemblies 22, to implement electrical connection between the electrode terminal 23 and the electrode assembly 22. This is beneficial to reducing the assembly difficulty between the tabs and the electrode terminals 23.

Referring to FIG. 3, FIG. 4, FIG. 5, FIG. 6, FIG. 7, FIG. 8, and FIG. 9, in some embodiments, the housing 21 includes a shell 214 and an end cap 213, where the shell 214 has a second opening 2141, and the end cap 213 is connected to the shell 214 and closes the second opening 2141. The end cap 213 is the first wall portion 211, or the shell 214 includes the first wall portion 211.

The shell 214 includes a side wall and a bottom wall integrally formed, meaning that the shell 214 is manufactured using an integral forming process, such as stamping, casting, or extrusion molding. In other words, the side wall and the bottom wall of the shell 214 are an integral structure.

The shell 214 includes the first wall portion 211, meaning that the first wall portion 211 is one wall of the shell 214. For example, in FIG. 9, the first wall portion 211 is the bottom wall of the shell 214 disposed opposite the end cap 213 in the thickness direction of the first wall portion 211. Certainly, in other embodiments, the first wall portion 211 may be a side wall of the shell 214.

It should be noted that the structure of the battery cell 20 is not limited to this. In some embodiments, the battery cell 20 may be of other structures. For example, the housing 21 may include a shell 214 and an end cap 213, an accommodating cavity having a second opening 2141 is formed in the interior of the shell 214, the accommodating cavity is configured to accommodate the electrode assembly 22, and the end cap 213 closes the second opening 2141, where the end cap 213 is the first wall portion 211.

It should be noted that the battery cell 20 may also be of various structures. In some embodiments, the housing 21 may include a shell 214 and two end caps 213, an accommodating cavity is formed in the interior of the shell 214, and the accommodating cavity is configured to accommodate the electrode assembly 22. The shell 214 has second openings 2141 formed at two ends in the thickness direction of the first wall portion 211, the two second openings 2141 are both in communication with the accommodating cavity, and the two end caps 213 respectively close the two second openings 2141, where one of the two end caps 213 is the first wall portion 211.

The shell 214 of the housing 21 is provided with the second openings 2141 at two ends in the thickness direction of the first wall portion 211, and the two end caps 213 respectively close the two second openings 2141, where the first wall portion 211 is one of the two end caps 213. A battery cell 20 with this structure facilitates assembly of the battery cell 20 from two ends of the shell 214, reducing the manufacturing difficulty and assembly difficulty of the battery cell 20.

When the end cap 213 is the first wall portion 211, the pressure relief component 212 is disposed on the end cap 213, which is easy to manufacture. When the shell 214 includes the first wall portion 211, the pressure relief component 212 is disposed on one wall of the shell 214, and the fluid medium ejected from the pressure relief component 212 is less likely to act on other electrical connection structures on the end cap 213, reducing the risk of short circuits in the battery cell 20.

In some embodiments, the clearance portion 32 is a through hole or a groove provided on the support member 30.

When the clearance portion 32 is a through hole provided on the support member 30, the through hole penetrates the support member 30 along the thickness direction of the first wall portion 211. When the clearance portion 32 is a groove provided on the support member 30, the groove is recessed from the support surface 31 in a direction facing away from the battery cell 20.

In an embodiment where the clearance portion 32 is a groove provided on the support member 30, the bottom wall of the groove can be designed to be thinner, so that during pressure relief of the battery cell 20, the fluid medium can break through the bottom wall of the groove to facilitate pressure relief.

A through hole or a groove is formed as the clearance portion 32 on the support member 30, which is simple, convenient, and easy to manufacture.

Referring to FIG. 3 and FIG. 4, in some embodiments, the clearance portion 32 is in one-to-one correspondence with the pressure relief component 212.

Each pressure relief component 212 of each battery cell 20 has one clearance portion 32 corresponding to it. The clearance portions 32 and the pressure relief components 212 are in a one-to-one relationship.

By setting the clearance portion 32 in one-to-one correspondence with the pressure relief component 212, an avoidance effect is provided for each pressure relief component 212. This allows each battery cell 20 to relieve pressure smoothly, enhancing the reliability of the battery 100. Additionally, since the clearance portion 32 is in one-to-one correspondence with the pressure relief component 212, the individual clearance portions 32 can be designed to be smaller, and the structure retained between two adjacent clearance portions 32 can be regarded as a reinforcing rib, allowing the support member 30 to have high strength.

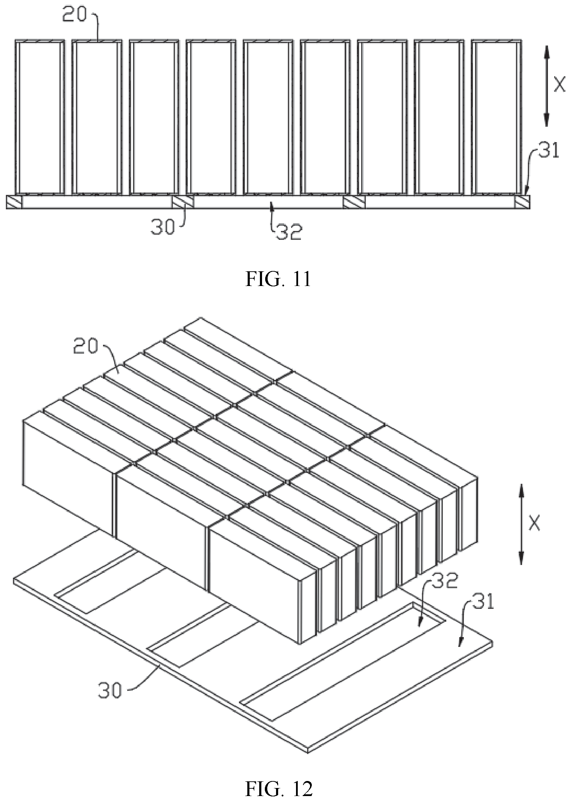

Referring to FIG. 10 and FIG. 11, FIG. 10 is a schematic structural diagram of a battery cell 20 and a support member 30 according to some other embodiments of this application. FIG. 11 is a cross-sectional view of a battery cell 20 and a support member 30 according to some other embodiments of this application. In some other embodiments, at least one clearance portion 32 corresponds to the pressure relief components 212 of multiple battery cells 20.

At least one clearance portion 32 has a one-to-many relationship with the pressure relief components 212, meaning that at least one clearance portion 32 can be used to avoid two or more pressure relief components 212. Certainly, each clearance portion 32 may have a one-to-many relationship with the pressure relief components 212.

One clearance portion 32 can correspond to the pressure relief components 212 of multiple battery cells 20, and the structure retained between two adjacent clearance portions 32 can be regarded as a reinforcing rib, allowing the support member 30 to have high strength. Additionally, the individual clearance portions 32 can be designed to be larger, which can absorb assembly tolerance, lowering assembly requirements.

Referring to FIG. 10 and FIG. 11, in some embodiments, the battery 100 includes multiple rows of battery cells 20, and one clearance portion 32 corresponds to the pressure relief components 212 of at least two battery cells 20 in one row of battery cells 20.

One clearance portion 32 may correspond to the pressure relief components 212 of two battery cells 20 in one row of battery cells 20, or one clearance portion 32 may correspond to the pressure relief components 212 of three battery cells 20 in one row of battery cells 20, or one clearance portion 32 may correspond to the pressure relief components 212 of four battery cells 20 in one row of battery cells 20, or one clearance portion 32 may correspond to more than four battery cells 20 in one row of battery cells 20.

The battery 100 includes multiple rows of battery cells 20, and correspondingly, the clearance portions 32 can also be arranged in multiple rows, with the number of clearance portions 32 being less than the number of battery cells 20, so that one clearance portion 32 can correspond to the pressure relief components 212 of at least two battery cells 20 in one row of battery cells 20.

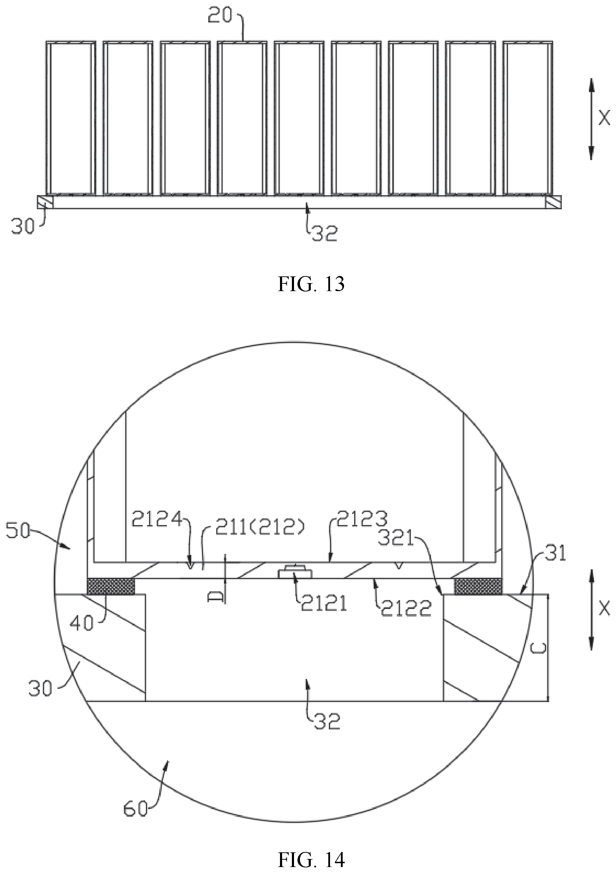

Referring to FIG. 12 and FIG. 13, FIG. 12 is a schematic structural diagram of a battery cell 20 and a support member 30 according to still some other embodiments of this application. FIG. 13 is a cross-sectional view of a battery cell 20 and a support member 30 according to still some other embodiments of this application. In still some other embodiments, the battery 100 includes multiple rows of battery cells 20, and one clearance portion 32 corresponds to the pressure relief components 212 of one row of battery cells 20.

One clearance portion 32 corresponds to the pressure relief components 212 of one row of battery cells 20, and along the thickness direction of the first wall portion 211, projections of the pressure relief components 212 of one row of battery cells 20 all fall within one clearance portion 32.

The battery 100 includes multiple rows of battery cells 20, and correspondingly, the clearance portions 32 are also arranged in multiple rows, with one clearance portion 32 corresponding to the pressure relief components 212 of one row of battery cells 20. This facilitates absorption of assembly tolerance, lowering assembly requirements.

Referring to FIG. 14, FIG. 14 is a cross-sectional view of a battery cell 20 and a support member 30 according yet some other embodiments of this application. In yet some other embodiments, the support member 30 is connected to the first wall portion 211 through an adhesive layer 40.

"The support member 30 is connected to the first wall portion 211 through an adhesive layer 40" means that the support member 30 is adhesively fixed to the first wall portion 211.

The support member 30 is adhesively fixed to the wall portion, allowing the battery cell 20 to be stably connected to the support member 30, and reducing the risk of the battery cell 20 detaching from the support member 30 during use of the battery 100. Additionally, the assembly difficulty and costs are low.

Referring to FIG. 14, in some embodiments, the clearance portion 32 has a first opening 321 formed on the support surface 31, and a gap is present between the adhesive layer 40 and an edge of the first opening 321.

Along the thickness direction of the first wall portion 211, the projection of the adhesive layer 40 on the support surface 31 is located outside the edge of the first opening 321.

A gap is present between the adhesive layer 40 and the edge of the first opening 321, and the adhesive layer 40 surrounds the outer side of the first opening 321, making the adhesive layer 40 less likely to suppress deformation of the pressure relief component 212 and less likely to suppress the rupture of the first groove 2121. This enables the first groove 2121 to rupture promptly during pressure relief of the battery cell 20, improving the timely pressure relief of the battery cell 20 and enhancing the reliability of the battery 100.

Referring to FIG. 14, in some embodiments, the battery 100 includes an electrical cavity 50 and an exhaust cavity 60, where along the thickness direction of the first wall portion 211, the electrical cavity 50 and the exhaust cavity 60 are located on two sides of the support member 30, the electrical cavity 50 is configured to accommodate the battery cell 20, and the exhaust cavity 60 is configured to guide gas flow during pressure relief of the battery cell 20.

The support member 30 separates the electrical cavity 50 and the exhaust cavity 60 within the box 10, and along the thickness direction of the first wall portion 211, the electrical cavity 50 and the exhaust cavity 60 are respectively located on two sides of the support member 30. The battery cell 20 is accommodated in the electrical cavity 50, and the exhaust cavity 60 is configured to guide the flow of gas during pressure relief of the battery cell 20, implementing smooth pressure relief of the battery cell 20.

The electrical cavity 50 is provided to accommodate the battery cell 20, the exhaust cavity 60 is provided to discharge the fluid medium, and the electrical cavity 50 and the exhaust cavity 60 are respectively disposed on two sides of the support member 30, making the discharged fluid medium less likely to act on the battery cell 20 in the electrical cavity 50. This reduces the risk of short circuits in the battery cell 20, enhancing the reliability of the battery 100.

In some embodiments, the support member 30 is configured as capable of performing thermal management on the battery cell 20.

The support member 30 may be a thermal management component. For example, the support member 30 may be a water-cooling plate, and the water-cooling plate supports the first wall portion 211 of the battery cell 20.

The support member 30 can also perform thermal management on the battery cell 20 to control the temperature of the battery cell 20 within a suitable range, facilitating the performance of the battery cell 20. A single component of the support member 30 can perform multiple functions, simplifying the structure of the battery 100.

Referring to FIG. 14, in some embodiments, a minimum thickness of the support member 30 in a region other than the clearance portion 32 is greater than a maximum thickness of the first wall portion 211.

Referring to FIG. 14, the minimum thickness of the support member 30 in a region other than the clearance portion 32 is C, and the maximum thickness of the first wall portion 211 is D, satisfying: C > D.

The minimum thickness of the support member 30 in a region other than the clearance portion 32 is designed to be greater than the maximum thickness of the first wall portion 211, so that the support member 30 has a relatively large thickness, and the support member 30 has sufficient strength to stably support the battery cell 20.

An embodiment of this application further provides an electric device, where the electric device includes the foregoing battery 100.

According to some embodiments of this application, refer to FIG. 3 to FIG. 14.

An embodiment of this application provides a battery cell 20, where the battery cell 20 includes a battery cell 20 and a support member 30. The battery cell 20 includes a housing 21 and a pressure relief component 212, where the housing 21 includes a first wall portion 211, and the pressure relief component 212 is disposed on the first wall portion 211. The pressure relief component 212 includes a first groove 2121, and the pressure relief component 212 is configured as capable of rupturing along the first groove 2121 during pressure relief of the battery cell 20. The support member 30 supports the first wall portion 211, the support member 30 has a support surface 31 facing the first wall portion 211, and the support surface 31 is provided with a clearance portion 32. Along a thickness direction of the first wall portion 211, a projection of the first groove 2121 is located within the clearance portion 32. The first wall portion 211 of the battery cell 20 is provided with a pressure relief component 212, and during pressure relief of the battery cell 20, the pressure relief component 212 can rupture along the first groove 2121 to allow the fluid medium inside the battery cell 20 to flow out for pressure relief. The support member 30 can support the battery cell 20. Through provision of the clearance portion 32 on the support member 30, with the projection of the first groove 2121 along the thickness direction of the first wall portion 211 falling within the clearance portion 32, the clearance portion 32 can avoid the first groove 2121, so that during pressure relief of the battery cell 20, the support member 30 is less likely to abut against an outer side of the first groove 2121, less likely to suppress deformation of the pressure relief component 212, and less likely to suppress the rupture of the first groove 2121. This enables the first groove 2121 to rupture promptly during pressure relief of the battery cell 20, improving the timely pressure relief of the battery cell 20 and enhancing the reliability of the battery 100.

The clearance portion 32 has a first opening 321 formed on the support surface 31, and a minimum distance between the projection of the first groove 2121 on the support surface 31 along the thickness direction of the first wall portion 211 and an edge of the first opening 321 is A, satisfying: A ≥ 3 mm. When the minimum distance between the projection of the first groove 2121 on the support surface 31 along the thickness direction of the first wall portion 211 and the edge of the first opening 321 is greater than or equal to 3 mm, in a direction perpendicular to the thickness direction of the first wall portion 211, the first groove 2121 is relatively far from the edge of the first opening 321, and the clearance portion 32 has a better avoidance effect on the first groove 2121. During pressure relief of the battery cell 20, the support member 30 is even less likely to abut against the outer side of the first groove 2121, even less likely to suppress deformation of the pressure relief component 212, and even less likely to suppress the rupture of the first groove 2121. This enables the first groove 2121 to rupture promptly during pressure relief of the battery cell 20, improving the timely pressure relief of the battery cell 20 and enhancing the reliability of the battery 100. Additionally, by setting the minimum distance between the projection of the first groove 2121 on the support surface 31 along the thickness direction of the first wall portion 211 and the edge of the first opening 321 to be greater than or equal to 3 mm, the first opening 321 of the clearance portion 32 is relatively large, which can absorb assembly errors, lowering assembly requirements.

The first wall portion 211 is a rectangular structure. A minimum distance between the projection of the first groove 2121 on the support surface 31 along the thickness direction of the first wall portion 211 and the edge of the first opening 321 in the length direction of the first wall portion 211 is A₁, and a minimum distance between the projection of the first groove 2121 on the support surface 31 along the thickness direction of the first wall portion 211 and the edge of the first opening 321 in a width direction of the first wall portion 211 is A₂, satisfying: A = A₂, and A₂ < A₁. The minimum distance between the projection of the first groove 2121 on the support surface 31 along the thickness direction of the first wall portion 211 and the edge of the first opening 321 in the width direction of the first wall portion 211 is the minimum distance between the projection of the first groove 2121 on the support surface 31 along the thickness direction of the first wall portion 211 and the edge of the first opening 321. Additionally, the minimum distance between the projection of the first groove 2121 on the support surface 31 along the thickness direction of the first wall portion 211 and the edge of the first opening 321 in the length direction of the first wall portion 211 is greater than the minimum distance between the projection of the first groove 2121 on the support surface 31 along the thickness direction of the first wall portion 211 and the edge of the first opening 321 in the width direction of the first wall portion 211, so that the support member 30 has less suppression on the deformation of the pressure relief component 212 in the length direction of the first wall portion 211. Since the first wall portion 211 is a rectangular structure, the stiffness variation of the pressure relief component 212 in the width direction of the first wall portion 211 is smaller, while the stiffness variation of the pressure relief component 212 in the length direction of the first wall portion 211 is larger. The deformation at the middle position of the pressure relief component 212 in the length direction of the first wall portion 211 is greater than the deformation at the edge position of the pressure relief component 212 in the length direction of the first wall portion 211, while the deformation at the middle position of the pressure relief component 212 in the width direction of the first wall portion 211 is smaller than the deformation at the edge position of the pressure relief component 212 in the width direction of the first wall portion 211. By setting the minimum distance between the projection of the first groove 2121 on the support surface 31 along the thickness direction of the first wall portion 211 and the edge of the first opening 321 in the length direction of the first wall portion 211 to be greater than the minimum distance between the projection of the first groove 2121 on the support surface 31 along the thickness direction of the first wall portion 211 and the edge of the first opening 321 in the width direction of the first wall portion 211, the suppression of deformation of the pressure relief component 212 in the length direction of the first wall portion 211 is reduced, allowing for large deformation of the pressure relief component 212 during pressure relief of the battery cell 20. This enables the first groove 2121 to rupture more promptly, improving the timely pressure relief of the battery cell 20 and enhancing the reliability of the battery 100.

A₁ ≥ 5 mm. When the minimum distance between the projection of the first groove 2121 on the support surface 31 along the thickness direction of the first wall portion 211 and the edge of the first opening 321 in the length direction of the first wall portion 211 is greater than or equal to 5 mm, in the length direction of the first wall portion 211, the first groove 2121 is relatively far from the edge of the first opening 321, and the clearance portion 32 has a better avoidance effect on the first groove 2121. During pressure relief of the battery cell 20, the support member 30 is even less likely to abut against the outer side of the first groove 2121, even less likely to suppress deformation of the pressure relief component 212, and even less likely to suppress the rupture of the first groove 2121. This enables the first groove 2121 to rupture promptly during pressure relief of the battery cell 20, improving the timely pressure relief of the battery cell 20 and enhancing the reliability of the battery 100. Additionally, by setting the minimum distance between the projection of the first groove 2121 on the support surface 31 along the thickness direction of the first wall portion 211 and the edge of the first opening 321 in the length direction of the first wall portion 211 to be greater than or equal to 5 mm, the clearance portion 32 has a larger dimension in the length direction of the first wall portion 211, which can absorb assembly errors, lowering assembly requirements.

The first groove 2121 defines a predetermined pressure relief region 21211. The pressure relief component 212 includes a second groove 2124, where the second groove 2124 is configured to guide at least a portion of the predetermined pressure relief region 21211 to flip to open at least a portion of the predetermined pressure relief region 21211. Along the thickness direction of the first wall portion 211, a projection of the second groove 2124 is located within the clearance portion 32. Through provision of the second groove 2124, the strength of the pressure relief component 212 at the position of the second groove 2124 is weakened, making it easier for the predetermined pressure relief region 21211 to flip open under the action of the fluid medium. This not only increases the probability of opening the predetermined pressure relief region 21211 but also increases the opening speed of the predetermined pressure relief region 21211, implementing rapid pressure relief and reducing the risk of explosion or fire of the battery cell 20, thereby enhancing the reliability of the battery cell 20. Through provision of the clearance portion 32 on the support member 30, with the projection of the second groove 2124 along the thickness direction of the first wall portion 211 falling within the clearance portion 32, the clearance portion 32 can avoid the second groove 2124, so that during pressure relief of the battery cell 20, the support member 30 is less likely to abut against the outer side of the predetermined pressure relief region 21211, less likely to prevent the predetermined pressure relief region 21211 from flipping open. This enables the predetermined pressure relief region 21211 to flip open promptly during pressure relief of the battery cell 20, improving the timely pressure relief of the battery cell 20 and enhancing the reliability of the battery 100.

The clearance portion 32 has a first opening 321 formed on the support surface 31, and a minimum distance between the projection of the second groove 2124 on the support surface 31 along the thickness direction of the first wall portion 211 and an edge of the first opening 321 is B, satisfying: B ≥ 3 mm. When the minimum distance between the projection of the second groove 2124 on the support surface 31 along the thickness direction of the first wall portion 211 and the edge of the first opening 321 is greater than or equal to 3 mm, in a direction perpendicular to the thickness direction of the first wall portion 211, the second groove 2124 is relatively far from the edge of the first opening 321, and the clearance portion 32 has a better avoidance effect on the second groove 2124. During pressure relief of the battery cell 20, the support member 30 is even less likely to abut against the predetermined pressure relief region 21211, and even less likely to suppress the flipping of the predetermined pressure relief region 21211. This enables the predetermined pressure relief region 21211 to flip open promptly during pressure relief of the battery cell 20, improving the timely pressure relief of the battery cell 20 and enhancing the reliability of the battery 100. Additionally, by setting the minimum distance between the projection of the second groove 2124 on the support surface 31 along the thickness direction of the first wall portion 211 and the edge of the first opening 321 to be greater than or equal to 3 mm, the first opening 321 of the clearance portion 32 is relatively large, which can absorb assembly errors, further lowering assembly requirements.

In some embodiments, the clearance portion 32 is in one-to-one correspondence with the pressure relief component 212. By setting the clearance portion 32 in one-to-one correspondence with the pressure relief component 212, an avoidance effect is provided for each pressure relief component 212. This allows each battery cell 20 to relieve pressure smoothly, enhancing the reliability of the battery 100. Additionally, since the clearance portion 32 is in one-to-one correspondence with the pressure relief component 212, the individual clearance portions 32 can be designed to be smaller, and the structure retained between two adjacent clearance portions 32 can be regarded as a reinforcing rib, allowing the support member 30 to have high strength.

In some other embodiments, at least one clearance portion 32 corresponds to the pressure relief components 212 of multiple battery cells 20. One clearance portion 32 can correspond to the pressure relief components 212 of multiple battery cells 20, and the structure retained between two adjacent clearance portions 32 can be regarded as a reinforcing rib, allowing the support member 30 to have high strength. Additionally, the individual clearance portions 32 can be designed to be larger, which can absorb assembly tolerance, lowering assembly requirements.

The foregoing descriptions are merely preferred embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery, comprising:
a battery cell, comprising a housing and a pressure relief component, wherein the housing comprises a first wall portion, the pressure relief component is disposed on the first wall portion, the pressure relief component comprises a first groove, and the pressure relief component is configured as capable of rupturing along the first groove during pressure relief of the battery cell; and
a support member, supporting the first wall portion, wherein the support member has a support surface facing the first wall portion, the support surface is provided with a clearance portion, and along a thickness direction of the first wall portion, a projection of the first groove is located within the clearance portion.

2. The battery according to claim 1, wherein the clearance portion has a first opening formed on the support surface, and a minimum distance between the projection of the first groove on the support surface along the thickness direction of the first wall portion and an edge of the first opening is A, satisfying: A ≥ 3 mm.

3. The battery according to claim 2, wherein the first wall portion is a rectangular structure, a minimum distance between the projection of the first groove on the support surface along the thickness direction of the first wall portion and the edge of the first opening in a length direction of the first wall portion is A₁, and a minimum distance between the projection of the first groove on the support surface along the thickness direction of the first wall portion and the edge of the first opening in a width direction of the first wall portion is A₂, satisfying: A = A₂, and A₂ < A₁.

4. The battery according to claim 3, wherein A₁ ≥ 5 mm.

5. The battery according to claim 3 or 4, wherein a difference between A₁ and A₂ is less than 10 mm.

6. The battery according to any one of claims 1 to 5, wherein the first groove defines a predetermined pressure relief region, and the pressure relief component comprises a second groove, wherein the second groove is configured to guide at least a portion of the predetermined pressure relief region to flip to open at least a portion of the predetermined pressure relief region; and
along the thickness direction of the first wall portion, a projection of the second groove is located within the clearance portion.

7. The battery according to claim 6, wherein the clearance portion has a first opening formed on the support surface, and a minimum distance between the projection of the second groove on the support surface along the thickness direction of the first wall portion and an edge of the first opening is B, satisfying: B ≥ 3 mm.

8. The battery according to claim 7, wherein the first wall portion is a rectangular structure, a minimum distance between the projection of the second groove on the support surface along the thickness direction of the first wall portion and the edge of the first opening in the length direction of the first wall portion is B₁, and a minimum distance between the projection of the second groove on the support surface along the thickness direction of the first wall portion and the edge of the first opening in the width direction of the first wall portion is B₂, satisfying: B = B₂, and B₂ < B₁.

9. The battery according to claim 8, wherein the first groove and the second groove are arranged along the width direction of the first wall portion, and the minimum distance between the projection of the first groove on the support surface along the thickness direction of the first wall portion and the edge of the first opening in the width direction of the first wall portion is A₁, wherein A₁ > B₁.

10. The battery according to claim 8 or 9, wherein along the width direction of the first wall portion, the projection of the second groove on the support surface is located between the projection of the first groove on the support surface and the edge of the first opening.

11. The battery according to any one of claims 8 to 10, wherein along the width direction of the first wall portion, the second groove is disposed on each of two sides of the first groove.

12. The battery according to any one of claims 6 to 11, wherein the pressure relief component has a first surface and a second surface opposite each other in the thickness direction of the first wall portion, wherein the first groove is disposed on the first surface, and the second groove is disposed on the second surface.

13. The battery according to claim 12, wherein the first surface is a surface of the pressure relief component facing away from an interior of the housing, and the second surface is a surface of the pressure relief component facing the interior of the housing.

14. The battery according to any one of claims 6 to 13, wherein the first groove comprises a first groove segment, a second groove segment, and a third groove segment, wherein the first groove segment and the third groove segment are opposite each other, the second groove segment connects the first groove segment and the third groove segment, and the first groove segment, the second groove segment, and the third groove segment define the predetermined pressure relief region.

15. The battery according to claim 14, wherein the first groove defines two predetermined pressure relief regions, the two predetermined pressure relief regions are respectively located on two sides of the second groove segment, and each predetermined pressure relief region is correspondingly provided with at least one second groove.

16. The battery according to claim 15, wherein each predetermined pressure relief region is correspondingly provided with one second groove, and the first groove is located between the two second grooves.

17. The battery according to any one of claims 14 to 16, wherein a connection position of the second groove segment and the first groove segment is offset from both ends of the first groove segment, and a connection position of the second groove segment and the third groove segment is offset from both ends of the third groove segment.

18. The battery according to any one of claims 14 to 17, wherein the first groove segment, the second groove segment, and the third groove segment are all spaced apart from the second groove.

19. The battery according to claim 18, wherein the second groove segment and the second groove are opposite each other along a first direction, and along the first direction, the first groove segment and the third groove segment are both spaced apart from the second groove.

20. The battery according to claim 19, wherein the first wall portion is a rectangular structure, and the first direction is parallel to the width direction of the first wall portion.

21. The battery according to any one of claims 1 to 20, wherein the pressure relief component has a first surface and a second surface opposite each other in the thickness direction of the first wall portion, and the first groove comprises multiple levels of grooves sequentially disposed along a direction from the first surface to the second surface, wherein in two adjacent levels of grooves, the groove farther from the first surface is disposed on a bottom surface of the groove closer to the first surface.

22. The battery according to any one of claims 1 to 21, wherein the battery cell comprises an electrode terminal, wherein the electrode terminal is disposed on a wall of the housing other than the first wall portion.

23. The battery according to claim 22, wherein the electrode terminal is disposed on a wall of the housing opposite the first wall portion.

24. The battery according to any one of claims 1 to 23, wherein the housing comprises:
a shell, having a second opening; and
an end cap, connected to the shell and closing the second opening,
wherein the end cap is the first wall portion, or the shell comprises the first wall portion.

25. The battery according to any one of claims 1 to 24, wherein the clearance portion is a through hole or a groove provided on the support member.

26. The battery according to any one of claims 1 to 25, wherein the clearance portion is in one-to-one correspondence with the pressure relief component.

27. The battery according to any one of claims 1 to 26, wherein at least one clearance portion corresponds to the pressure relief components of multiple battery cells.

28. The battery according to claim 27, wherein the battery comprises multiple rows of battery cells, and one clearance portion corresponds to the pressure relief components of at least two battery cells in one row of battery cells.

29. The battery according to claim 27, wherein the battery comprises multiple rows of battery cells, and one clearance portion corresponds to the pressure relief components of one row of battery cells.

30. The battery according to any one of claims 1 to 29, wherein the support member is connected to the first wall portion through an adhesive layer.

31. The battery according to claim 30, wherein the clearance portion has a first opening formed on the support surface, and a gap is present between the adhesive layer and the edge of the first opening.

32. The battery according to any one of claims 1 to 31, wherein the battery comprises an electrical cavity and an exhaust cavity, wherein along the thickness direction of the first wall portion, the electrical cavity and the exhaust cavity are located on two sides of the support member, the electrical cavity is configured to accommodate the battery cell, and the exhaust cavity is configured to guide gas flow during pressure relief of the battery cell.

33. The battery according to any one of claims 1 to 32, wherein the support member is configured as capable of performing thermal management on the battery cell.

34. The battery according to any one of claims 1 to 33, wherein a minimum thickness of the support member in a region other than the clearance portion is greater than a maximum thickness of the first wall portion.

35. An electric device, comprising the battery according to any one of claims 1 to 34.
